(19)

Europäisches
Patentamt
European
Patent Office
Office européen
des brevets

(11) **EP 4 231 500 A1**

(12) **EUROPEAN PATENT APPLICATION**
published in accordance with Art. 153(4) EPC

(43) Date of publication:
**23.08.2023 Bulletin 2023/34**

(21) Application number: **21883159.2**

(22) Date of filing: **18.10.2021**

(51) International Patent Classification (IPC):
*H02J 50/80* (2016.01)   *H02J 50/20* (2016.01)
*H04B 5/00* (2006.01)   *H04L 9/40* (2022.01)

(52) Cooperative Patent Classification (CPC):
**H02J 50/20; H02J 50/80; H04B 5/00; H04L 63/00**

(86) International application number:
**PCT/KR2021/014489**

(87) International publication number:
**WO 2022/086090 (28.04.2022 Gazette 2022/17)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **19.10.2020 KR 20200135288**

(71) Applicant: **LG Electronics Inc.**
**Yeongdeungpo-gu**
**Seoul 07336 (KR)**

(72) Inventors:
• **CHOI, Jingu**
**Seoul 06772 (KR)**

• **LIM, Jinkwon**
**Seoul 06772 (KR)**
• **PARK, Yongcheol**
**Seoul 06772 (KR)**
• **LEE, Minsoo**
**Seoul 06772 (KR)**
• **YOOK, Gyunghwan**
**Seoul 06772 (KR)**
• **YOUN, Jinho**
**Seoul 06772 (KR)**

(74) Representative: **Plasseraud IP**
**66, rue de la Chaussée d'Antin**
**75440 Paris Cedex 09 (FR)**

(54) **METHOD OF SETTING AUTOMATIC CONNECTION AND OPERATION FOR SUPPORTING DATA INTEGRITY IN WIRELESS POWER TRANSMISSION SYSTEM**

(57)    The present application relates to a method of transmitting a wireless power data packet, performed by a wireless power transmission device. The method is characterized in that on the basis of a wireless power encryption key, the wireless power data packet including integrity information and encrypted data is generated, wherein the encrypted data is data in which time information and a wireless power parameter are encrypted, the wireless power data packet is transmitted to a wireless power reception device, the integrity information is information used to verify validity of the wireless power data packet, and the time information is information indicating a time section in which the wireless power data packet is valid.

FIG. 24

**Description**

**TECHNICAL FIELD**

This specification relates to wireless power transfer.

**BACKGROUND ART**

The wireless power transfer (or transmission) technology corresponds to a technology that may wirelessly transfer (or transmit) power between a power source and an electronic device. For example, by allowing the battery of a wireless device, such as a smartphone or a tablet PC, and so on, to be recharged by simply loading the wireless device on a wireless charging pad, the wireless power transfer technique may provide more outstanding mobility, convenience, and safety as compared to the conventional wired charging environment, which uses a wired charging connector. Apart from the wireless charging of wireless devices, the wireless power transfer technique is raising attention as a replacement for the conventional wired power transfer environment in diverse fields, such as electric vehicles, Bluetooth earphones, 3D glasses, diverse wearable devices, household (or home) electric appliances, furniture, underground facilities, buildings, medical equipment, robots, leisure, and so on.

The wireless power transfer (or transmission) method is also referred to as a contactless power transfer method, or a no point of contact power transfer method, or a wireless charging method. A wireless power transfer system may be configured of a wireless power transmitter supplying electric energy by using a wireless power transfer method, and a wireless power receiver receiving the electric energy being supplied by the wireless power transmitter and supplying the receiving electric energy to a receiver, such as a battery cell, and so on.

The wireless power transfer technique includes diverse methods, such as a method of transferring power by using magnetic coupling, a method of transferring power by using radio frequency (RF), a method of transferring power by using microwaves, and a method of transferring power by using ultrasound (or ultrasonic waves). The method that is based on magnetic coupling is categorized as a magnetic induction method and a magnetic resonance method. The magnetic induction method corresponds to a method transmitting power by using electric currents that are induced to the coil of the receiver by a magnetic field, which is generated from a coil battery cell of the transmitter, in accordance with an electromagnetic coupling between a transmitting coil and a receiving coil. The magnetic resonance method is similar to the magnetic induction method in that is uses a magnetic field. However, the magnetic resonance method is different from the magnetic induction method in that energy is transmitted due to a concentration of magnetic fields on both a transmitting end and a receiving end, which is caused by the generated resonance.

Meanwhile, in wireless charging, the importance of security for data transmitted between a wireless power transmitter and a wireless power receiver is emerging. Accordingly, hereinafter, a technique for ensuring data integrity between a wireless power transmitter and a wireless power receiver will be provided.

**DISCLOSURE**

**TECHNICAL SOLUTION**

According to one embodiment of the present specification, a method and apparatus for performing, based on a wireless power encryption key, generating the wireless power data packet including encrypted data and integrity information, wherein the encrypted data is data in which time information and a wireless power parameter are encrypted, and transmitting the wireless power data packet to a wireless power receiver, wherein the integrity information is information used to verify a validity of the wireless power data packet, and wherein the time information is information informing a valid time interval of the wireless power data packet may be provided.

**ADVANTAGEOUS EFFECTS**

According to the present specification, the validity of the wireless power data packet can be verified through the integrity information, accordingly, even when hacking by a third device occurs, since hacked wireless power data packets can be filtered, security and data integrity can be enhanced. In addition, according to this specification, not only integrity information but also time information can be provided, even if hacking by a third device occurs, the time exposed to the risk of hacking can be minimized, so security and data integrity can be enhanced. Additionally, according to the present specification, in the case of a common device, since keys related to the device are not stored or the keys are stored short, memory resources can be efficiently managed even when a common device is connected to a large number of devices.

Effects obtainable through specific examples of the present specification are not limited to the effects listed above. For example, there may be various technical effects that a person having ordinary skill in the related art can understand or derive from this specification. Accordingly, the specific effects of the present specification are not limited to those explicitly described in the present specification, and may include various effects that can be understood or derived from the technical features of the present specification.

**BRIEF DESCRIPTION OF THE DRAWINGS**

FIG. 1 is a block diagram of a wireless power system (10) according to an exemplary embodiment of the present disclosure.

FIG. 2 is a block diagram of a wireless power system (10) according to another exemplary embodiment of the present disclosure.

FIG. 3 shows an exemplary embodiment of diverse electronic devices adopting a wireless power transfer system.

FIG. 4 shows an example of a WPC NDEF in a wireless power transfer system.

FIG. 5 is a block diagram of a wireless power transfer system according to another exemplary embodiment of the present disclosure.

FIG. 6 is a diagram illustrating an example of a Bluetooth communication architecture to which an embodiment according to the present disclosure may be applied.

FIG. 7 is a block diagram illustrating a wireless power transfer system using BLE communication according to an example.

FIG. 8 is a block diagram illustrating a wireless power transfer system using BLE communication according to another example.

FIG. 9 is a state transition diagram for describing a wireless power transfer procedure.

FIG. 10 shows a power control method according to an exemplary embodiment of the present disclosure.

FIG. 11 is a block diagram of a wireless power transmitter according to another exemplary embodiment of the present disclosure.

FIG. 12 shows a wireless power receiver according to another exemplary embodiment of the present disclosure.

FIG. 13 is a flowchart schematically illustrating a protocol of a ping phase according to an embodiment.

FIG. 14 is a flowchart schematically illustrating a protocol of a configuration phase according to an embodiment.

FIG. 15 is a diagram illustrating a message field of a configuration packet (CFG) of a wireless power receiver according to an embodiment.

FIG. 16 is a flowchart schematically illustrating a protocol of a negotiation step or a renegotiation step according to an embodiment.

FIG. 17 is a diagram illustrating a message field of a capability packet (CAP) of a wireless power transmitter according to an embodiment.

FIG. 18 is a flowchart schematically illustrating a protocol of a power transmission step according to an embodiment.

FIG. 19 illustrates a hierarchical architecture for transmitting/receiving an application level message between a wireless power transmitter and a wireless power receiver according to an example.

FIG. 20 illustrates a data transmission stream between a wireless power transmitter and a wireless power receiver according to an example.

FIG. 21 is a diagram illustrating a format of a message field of an ADC data packet according to an embodiment, and FIG. 22 is a diagram illustrating a format of a message field of an ADT data packet according to an embodiment.

FIG. 23 is a flowchart schematically illustrating a protocol for determining a communication mode to be used in a negotiation step or a renegotiation step according to an embodiment.

FIG. 24 is a flowchart of a method of transmitting a wireless power data packet according to an embodiment of the present specification.

FIG. 25 schematically illustrates an example of filtering validity of a wireless power data packet based on integrity information and time information.

FIG. 26 schematically illustrates an example in which different valid intervals are set according to charging capacity information.

FIG. 27 schematically illustrates an example of a method of configuring an integrity field based on a CCM function.

FIG. 28 illustrates the example of FIG. 27(b) in more detail.

FIG. 29 schematically illustrates an example of a link key generation method.

FIG. 30 schematically illustrates an example of a Bluetooth-based network key hierarchy and a Qi link key hierarchy.

FIG. 31 schematically illustrates an example of key binding.

FIG. 32 conceptually illustrates an example of key sharing in Bluetooth communication.

FIG. 33 schematically illustrates an example of a common device.

FIG. 34 is a flowchart of a public device key management method according to an embodiment of the present specification.

FIG. 35 is a schematic conceptualization of an example of a cloud-based operation.

FIG. 36 schematically illustrates the concept of automatic settings conversion.

FIG. 37 schematically illustrates an example of automatic setting conversion according to an embodiment.

FIG. 38 schematically illustrates an example of automatic setting conversion according to another embodiment.

FIG. 39 is a flowchart of an additional service dual role and automatic setting conversion according to an embodiment of the present specification.

FIG. 40 is a flowchart of a method of transmitting a wireless power data packet performed by a wireless power transmitter according to an embodiment of the present specification.

FIG. 41 is a flowchart of a method of receiving a wireless power data packet performed by a wireless power receiver according to an embodiment of the present specification.

## MODE FOR INVENTION

In this specification, "A or B" may refer to "only A", "only B" or "both A and B". In other words, "A or B" in this specification may be interpreted as "A and/or B". For example, in this specification, "A, B, or C" may refer to "only A", "only B", "only C", or any combination of "A, B and C".

The slash (/) or comma used in this specification may refer to "and/or". For example, "A/B" may refer to "A and/or B". Accordingly, "A/B" may refer to "only A", "only B", or "both A and B". For example, "A, B, C" may refer to "A, B, or C".

In this specification, "at least one of A and B" may refer to "only A", "only B", or "both A and B". In addition, in this specification, the expression of "at least one of A or B" or "at least one of A and/or B" may be interpreted to be the same as "at least one of A and B".

Also, in this specification, "at least one of A, B and C" may refer to "only A", "only B", "only C", or "any combination of A, B and C". Also, "at least one of A, B or C" or "at least one of A, B and/or C" may refer to "at least one of A, B and C".

In addition, parentheses used in the present specification may refer to "for example". Specifically, when indicated as "control information (PDCCH)", "PDCCH" may be proposed as an example of "control information". In other words, "control information" in this specification is not limited to "PDCCH", and "PDDCH" may be proposed as an example of "control information". In addition, even when indicated as "control information (i.e., PDCCH)", "PDCCH" may be proposed as an example of "control information".

In the present specification, technical features that are individually described in one drawing may be individually or simultaneously implemented. The term "wireless power", which will hereinafter be used in this specification, will be used to refer to an arbitrary form of energy that is related to an electric field, a magnetic field, and an electromagnetic field, which is transferred (or transmitted) from a wireless power transmitter to a wireless power receiver without using any physical electromagnetic conductors. The wireless power may also be referred to as a wireless power signal, and this may refer to an oscillating magnetic flux that is enclosed by a primary coil and a secondary coil. For example, power conversion for wirelessly charging devices including mobile phones, cordless phones, iPods, MP3 players, headsets, and so on, within the system will be described in this specification. Generally, the basic principle of the wireless power transfer technique includes, for example, all of a method of transferring power by using magnetic coupling, a method of transferring power by using radio frequency (RF), a method of transferring power by using microwaves, and a method of transferring power by using ultrasound (or ultrasonic waves).

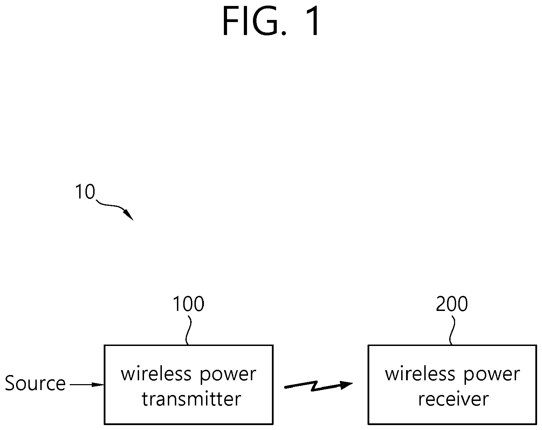

FIG. 1 is a block diagram of a wireless power system (10) according to an exemplary embodiment of the present disclosure.

Referring to FIG. 1, the wireless power system (10) include a wireless power transmitter (100) and a wireless power receiver (200).

The wireless power transmitter (100) is supplied with power from an external power source (S) and generates a magnetic field. The wireless power receiver (200) generates electric currents by using the generated magnetic field, thereby being capable of wirelessly receiving power.

Additionally, in the wireless power system (10), the wireless power transmitter (100) and the wireless power receiver (200) may transceive (transmit and/or receive) diverse information that is required for the wireless power transfer. Herein, communication between the wireless power transmitter (100) and the wireless power receiver (200) may be performed (or established) in accordance with any one of an in-band communication, which uses a magnetic field that is used for the wireless power transfer (or transmission), and an out-band communication, which uses a separate communication carrier. Out-band communication may also be referred to as out-of-band communication. Hereinafter, out-band communication will be largely described. Examples of out-band communication may include NFC, Bluetooth, Bluetooth low energy (BLE), and the like.

Herein, the wireless power transmitter (100) may be provided as a fixed type or a mobile (or portable) type.

Examples of the fixed transmitter type may include an embedded type, which is embedded in in-door ceilings or wall surfaces or embedded in furniture, such as tables, an implanted type, which is installed in out-door parking lots, bus stops, subway stations, and so on, or being installed in means of transportation, such as vehicles or trains. The mobile (or portable) type wireless power transmitter (100) may be implemented as a part of another device, such as a mobile device having a portable size or weight or a cover of a laptop computer, and so on.

Additionally, the wireless power receiver (200) should be interpreted as a comprehensive concept including diverse home appliances and devices that are operated by being wirelessly supplied with power instead of diverse electronic devices being equipped with a battery and a power cable. Typical examples of the wireless power receiver (200) may include portable terminals, cellular phones, smartphones, personal digital assistants (PDAs), portable media players (PDPs), Wibro terminals, tablet PCs, phablet, laptop computers, digital cameras, navigation terminals, television, electronic vehicles (EVs), and so on.

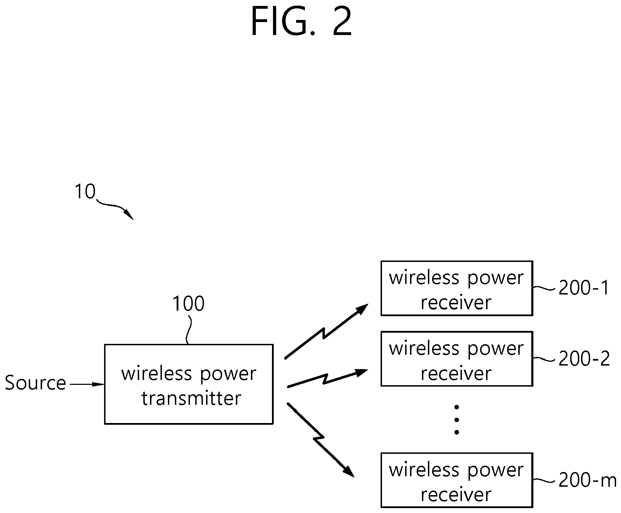

FIG. 2 is a block diagram of a wireless power system (10) according to another exemplary embodiment of the present disclosure.

Referring to FIG. 2, in the wireless power system (10), one wireless power receiver (200) or a plurality of wireless power receivers may exist. Although it is shown in FIG. 1 that the wireless power transmitter (100) and the wireless power receiver (200) send and receive power to and from one another in a one-to-one correspondence (or relationship), as shown in FIG. 2, it is also possible for one wireless power transmitter (100) to simultaneously transfer power to multiple wireless power receivers (200-1, 200-2, ..., 200-M). Most particularly, in case the wireless power transfer (or transmission) is performed by using a magnetic resonance method, one wireless power transmitter (100) may transfer power to multiple wireless power receivers (200-1, 200-2, ..., 200-M) by using a synchronized transport (or transfer) method or a time-division transport (or transfer) method.

Additionally, although it is shown in FIG. 1 that the wireless power transmitter (100) directly transfers (or transmits) power to the wireless power receiver (200), the wireless power system (10) may also be equipped with a separate wireless power transceiver, such as a relay or repeater, for increasing a wireless power transport distance between the wireless power transmitter (100) and the wireless power receiver (200). In this case, power is delivered to the wireless power transceiver from the wireless power transmitter (100), and, then, the wireless power transceiver may transfer the received power to the wireless power receiver (200).

Hereinafter, the terms wireless power receiver, power receiver, and receiver, which are mentioned in this specification, will refer to the wireless power receiver (200). Also, the terms wireless power transmitter, power transmitter, and transmitter, which are mentioned in this specification, will refer to the wireless power transmitter (100).

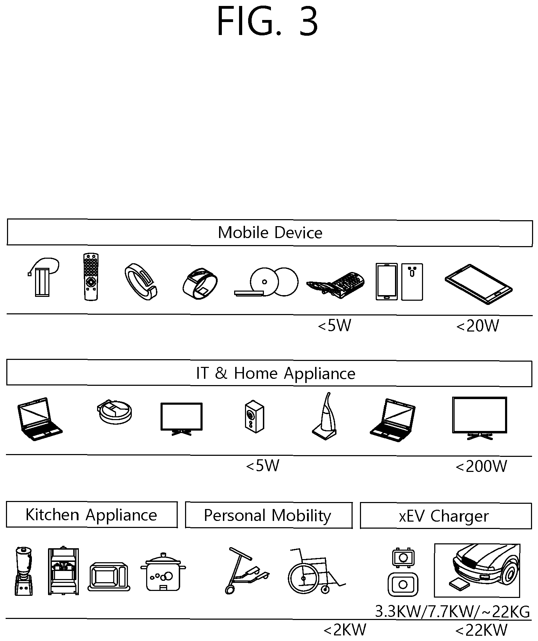

FIG. 3 shows an exemplary embodiment of diverse electronic devices adopting a wireless power transfer system.

As shown in FIG. 3, the electronic devices included in the wireless power transfer system are sorted in accordance with the amount of transmitted power and the amount of received power. Referring to FIG. 3, wearable devices, such as smart watches, smart glasses, head mounted displays (HMDs), smart rings, and so on, and mobile electronic devices (or portable electronic devices), such as earphones, remote controllers, smartphones, PDAs, tablet PCs, and so on, may adopt a low-power (approximately 5W or less or approximately 20W or less) wireless charging method.

Small-sized/Mid-sized electronic devices, such as laptop computers, robot vacuum cleaners, TV receivers, audio devices, vacuum cleaners, monitors, and so on, may adopt a midpower (approximately 50W or less or approximately 200W or less) wireless charging method. Kitchen appliances, such as mixers, microwave ovens, electric rice cookers, and so on, and personal transportation devices (or other electric devices or means of transportation), such as powered wheelchairs, powered kick scooters, powered bicycles, electric cars, and so on may adopt a high-power (approximately 2kW or less or approximately 22kW or less) wireless charging method.

The electric devices or means of transportation, which are described above (or shown in FIG. 1) may each include a wireless power receiver, which will hereinafter be described in detail. Therefore, the above-described electric devices or means of transportation may be charged (or recharged) by wirelessly receiving power from a wireless power transmitter.

Hereinafter, although the present disclosure will be described based on a mobile device adopting the wireless power charging method, this is merely exemplary. And, therefore, it shall be understood that the wireless charging method according to the present disclosure may be applied to diverse electronic devices.

A standard for the wireless power transfer (or transmission) includes a wireless power consortium (WPC), an air fuel alliance (AFA), and a power matters alliance (PMA).

The WPC standard defines a baseline power profile (BPP) and an extended power profile (EPP). The BPP is related to a wireless power transmitter and a wireless power receiver supporting a power transfer of 5W, and the EPP is related to a wireless power transmitter and a wireless power receiver supporting the transfer of a power range greater than 5W and less than 30W.

Diverse wireless power transmitters and wireless power receivers each using a different power level may be covered by each standard and may be sorted by different power classes or categories.

For example, the WPC may categorize (or sort) the wireless power transmitters and the wireless power receivers as PC-1, PC0, PC1, and PC2, and the WPC may provide a standard document (or specification) for each power class (PC). The PC-1 standard relates to wireless power transmitters and receivers providing a guaranteed power of less than 5W. The application of PC-1 includes wearable devices, such as smart watches.

The PC0 standard relates to wireless power transmitters and receivers providing a guaranteed power of 5W. The PC0 standard includes an EPP having a guaranteed power ranges that extends to 30W. Although in-band (IB) communication corresponds to a mandatory communication protocol of PC0, out-of-band (OB) communication that is used as an optional backup channel may also be used for PC0. The wireless power receiver may be identified by setting up an OB flag, which indicates whether or not the OB is supported, within a configuration packet. A wireless power transmitter supporting the OB may enter an OB handover phase by transmitting a bit-pattern for an OB handover as a response to the configuration packet. The response to the configuration packet may correspond to an NAK, an ND, or an 8-bit pattern that is newly defined. The application of the PC0 includes smartphones.

The PC1 standard relates to wireless power transmitters and receivers providing a guaranteed power ranging from 30W to 150W. OB corresponds to a mandatory communication channel for PC1, and IB is used for initialization and link establishment to OB. The wireless power transmitter may enter an OB handover phase by transmitting a bit-pattern for an OB handover as a response to the configuration packet. The application of the PC1 includes laptop computers or power tools.

The PC2 standard relates to wireless power transmitters and receivers providing a guaranteed power ranging from 200W to 2kW, and its application includes kitchen appliances.

As described above, the PCs may be differentiated in accordance with the respective power levels. And, information on whether or not the compatibility between the same PCs is supported may be optional or mandatory. Herein, the compatibility between the same PCs indicates that power transfer/reception between the same PCs is possible. For example, in case a wireless power transmitter corresponding to PC x is capable of performing charging of a wireless power receiver having the same PC x, it may be understood that compatibility is maintained between the same PCs. Similarly, compatibility between different PCs may also be supported. Herein, the compatibility between different PCs indicates that power transfer/reception between different PCs is also possible. For example, in case a wireless power transmitter corresponding to PC x is capable of performing charging of a wireless power receiver having PC y, it may be understood that compatibility is maintained between the different PCs.

The support of compatibility between PCs corresponds to an extremely important issue in the aspect of user experience and establishment of infrastructure. Herein, however, diverse problems, which will be described below, exist in maintaining the compatibility between PCs.

In case of the compatibility between the same PCs, for example, in case of a wireless power receiver using a lap-top charging method, wherein stable charging is possible only when power is continuously transferred, even if its respective wireless power transmitter has the same PC, it may be difficult for the corresponding wireless power receiver to stably receive power from a wireless power transmitter of the power tool method, which transfers power non-continuously. Additionally, in case of the compatibility between different PCs, for example, in case a wireless power transmitter having a minimum guaranteed power of 200W transfers power to a wireless power receiver having a maximum guaranteed power of 5W, the corresponding wireless power receiver may be damaged due to an overvoltage. As a result, it may be inappropriate (or difficult) to use the PS as an index/reference standard representing/indicating the compatibility.

Wireless power transmitters and receivers may provide a very convenient user experience and interface (UX/UI). That is, a smart wireless charging service may be provided, and the smart wireless charging service may be implemented based on a UX/UI of a smartphone including a wireless power transmitter. For these applications, an interface between a processor of a smartphone and a wireless charging receiver allows for "drop and play" two-way communication between the wireless power transmitter and the wireless power receiver.

Hereinafter, 'profiles' will be newly defined based on indexes/reference standards representing/indicating the compatibility. More specifically, it may be understood that by maintaining compatibility between wireless power transmitters and receivers having the same 'profile', stable power transfer/reception may be performed, and that power transfer/reception between wireless power transmitters and receivers having different 'profiles' cannot be performed. The 'profiles' may be defined in accordance with whether or not compatibility is possible and/or the application regardless of (or independent from) the power class.

For example, the profile may be sorted into 3 different categories, such as i) Mobile, ii) Power tool and iii) Kitchen.

For another example, the profile may be sorted into 4 different categories, such as i) Mobile, ii) Power tool, iii) Kitchen, and iv) Wearable.

In case of the 'Mobile' profile, the PC may be defined as PC0 and/or PC1, the communication protocol/method may be defined as IB and OB communication, and the operation frequency may be defined as 87 to 205kHz, and smartphones, laptop computers, and so on, may exist as the exemplary application.

In case of the 'Power tool' profile, the PC may be defined as PC1, the communication protocol/method may be defined as IB communication, and the operation frequency may be defined as 87 to 145kHz, and power tools, and so on, may exist as the exemplary application.

In case of the 'Kitchen' profile, the PC may be defined as PC2, the communication protocol/method may be defined as NFC-based communication, and the operation frequency may be defined as less than 100kHz, and kitchen/home appliances, and so on, may exist as the exemplary application.

In the case of power tools and kitchen profiles, NFC communication may be used between the wireless power transmitter and the wireless power receiver. The wireless power transmitter and the wireless power receiver may confirm that they are NFC devices with each other by exchanging WPC NFC data exchange profile format (NDEF).

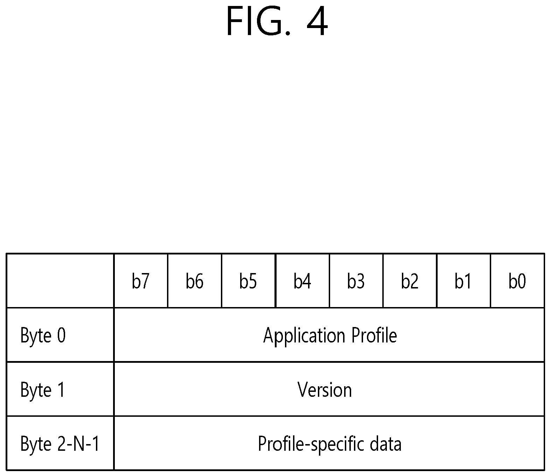

FIG. 4 shows an example of a WPC NDEF in a wireless power transfer system.

Referring to FIG. 4, the WPC NDEF may include, for example, an application profile field (e.g., 1B), a version field (e.g., 1B), and profile specific data (e.g., 1B). The application profile field indicates whether the corresponding device is i) mobile and computing, ii) power tool, and iii) kitchen, and an upper nibble in the version field indicates a major version and a lower nibble indicates a minor version. In addition, profile-specific data defines content for the kitchen.

In case of the 'Wearable' profile, the PC may be defined as PC-1, the communication protocol/method may be defined as IB communication, and the operation frequency may be defined as 87 to 205kHz, and wearable devices that are worn by the users, and so on, may exist as the exemplary application.

It may be mandatory to maintain compatibility between the same profiles, and it may be optional to maintain compatibility between different profiles.

The above-described profiles (Mobile profile, Power tool profile, Kitchen profile, and Wearable profile) may be generalized and expressed as first to nth profile, and a new profile may be added/replaced in accordance with the WPC standard and the exemplary embodiment.

In case the profile is defined as described above, the wireless power transmitter may optionally perform power transfer only to the wireless power receiving corresponding to the same profile as the wireless power transmitter, thereby being capable of performing a more stable power transfer. Additionally, since the load (or burden) of the wireless power transmitter may be reduced and power transfer is not attempted to a wireless power receiver for which compatibility is not possible, the risk of damage in the wireless power receiver may be reduced.

PC1 of the 'Mobile' profile may be defined by being derived from an optional extension, such as OB, based on PC0. And, the 'Power tool' profile may be defined as a simply modified version of the PC1 'Mobile' profile. Additionally, up until now, although the profiles have been defined for the purpose of maintaining compatibility between the same profiles, in the future, the technology may be evolved to a level of maintaining compatibility between different profiles. The wireless power transmitter or the wireless power receiver may notify (or announce) its profile to its counterpart by using diverse methods.

In the AFA standard, the wireless power transmitter is referred to as a power transmitting unit (PTU), and the wireless power receiver is referred to as a power receiving unit (PRU). And, the PTU is categorized to multiple classes, as shown in Table 1, and the PRU is categorized to multiple classes, as shown in Table 2.

[Table 1]

| PTU | $P_{TX\_IN\_MAX}$ | Minimum category support requirement | Minimum value for a maximum number of supported devices |
|---|---|---|---|
| Class 1 | 2W | 1x Category 1 | 1x Category 1 |
| Class 2 | 10W | 1x Category 3 | 2x Category 2 |
| Class 3 | 16W | 1x Category 4 | 2x Category 3 |
| Class 4 | 33W | 1x Category 5 | 3x Category 3 |
| Class 5 | 50W | 1x Category 6 | 4x Category 3 |
| Class 6 | 70W | 1x Category 7 | 5x Category 3 |

[Table 2]

| PRU | $P_{RX\_OUT\_MAX'}$ | Exemplary application |
|---|---|---|
| Category 1 | TBD | Bluetooth headset |
| Category 2 | 3.5W | Feature phone |
| Category 3 | 6.5W | Smartphone |
| Category 4 | 13W | Tablet PC, Phablet |

(continued)

| PRU | $P_{RX\_OUT\_MAX'}$ | Exemplary application |
|---|---|---|
| Category 5 | 25W | Small form factor laptop |
| Category 6 | 37.5W | General laptop |
| Category 7 | 50W | Home appliance |

As shown in Table 1, a maximum output power capability of Class n PTU may be equal to or greater than the $P_{TX\_IN\_MAX}$ of the corresponding class. The PRU cannot draw a power that is higher than the power level specified in the corresponding category.

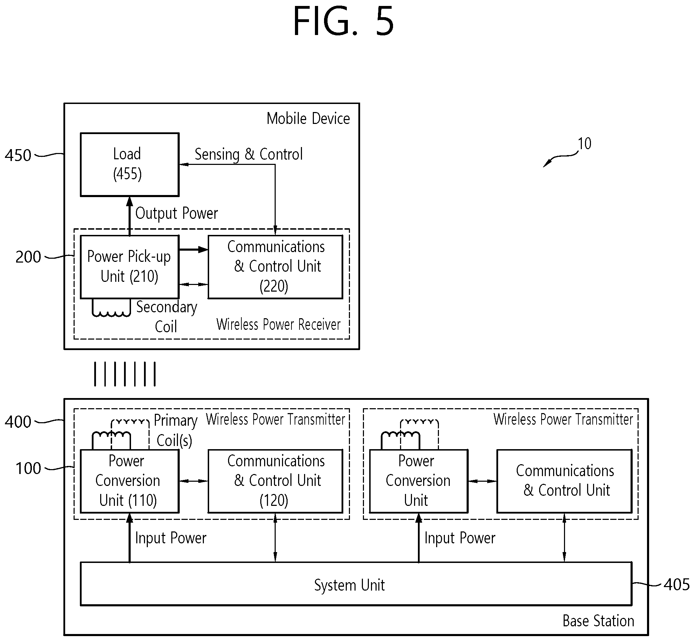

FIG. 5 is a block diagram of a wireless power transfer system according to another exemplary embodiment of the present disclosure.

Referring to FIG. 5, the wireless power transfer system (10) includes a mobile device (450), which wirelessly receives power, and a base station (400), which wirelessly transmits power.

As a device providing induction power or resonance power, the base station (400) may include at least one of a wireless power transmitter (100) and a system unit (405). The wireless power transmitter (100) may transmit induction power or resonance power and may control the transmission. The wireless power transmitter (100) may include a power conversion unit (110) converting electric energy to a power signal by generating a magnetic field through a primary coil (or primary coils), and a communications & control unit (120) controlling the communication and power transfer between the wireless power receiver (200) in order to transfer power at an appropriate (or suitable) level. The system unit (405) may perform input power provisioning, controlling of multiple wireless power transmitters, and other operation controls of the base station (400), such as user interface control.

The primary coil may generate an electromagnetic field by using an alternating current power (or voltage or current). The primary coil is supplied with an alternating current power (or voltage or current) of a specific frequency, which is being outputted from the power conversion unit (110). And, accordingly, the primary coil may generate a magnetic field of the specific frequency. The magnetic field may be generated in a non-radial shape or a radial shape. And, the wireless power receiver (200) receives the generated magnetic field and then generates an electric current. In other words, the primary coil wirelessly transmits power.

In the magnetic induction method, a primary coil and a secondary coil may have randomly appropriate shapes. For example, the primary coil and the secondary coil may correspond to copper wire being wound around a high-permeability formation, such as ferrite or a non-crystalline metal. The primary coil may also be referred to as a transmitting coil, a primary core, a primary winding, a primary loop antenna, and so on. Meanwhile, the secondary coil may also be referred to as a receiving coil, a secondary core, a secondary winding, a secondary loop antenna, a pickup antenna, and so on.

In case of using the magnetic resonance method, the primary coil and the secondary coil may each be provided in the form of a primary resonance antenna and a secondary resonance antenna. The resonance antenna may have a resonance structure including a coil and a capacitor. At this point, the resonance frequency of the resonance antenna may be determined by the inductance of the coil and a capacitance of the capacitor. Herein, the coil may be formed to have a loop shape. And, a core may be placed inside the loop. The core may include a physical core, such as a ferrite core, or an air core.

The energy transmission (or transfer) between the primary resonance antenna and the second resonance antenna may be performed by a resonance phenomenon occurring in the magnetic field. When a near field corresponding to a resonance frequency occurs in a resonance antenna, and in case another resonance antenna exists near the corresponding resonance antenna, the resonance phenomenon refers to a highly efficient energy transfer occurring between the two resonance antennas that are coupled with one another. When a magnetic field corresponding to the resonance frequency is generated between the primary resonance antenna and the secondary resonance antenna, the primary resonance antenna and the secondary resonance antenna resonate with one another. And, accordingly, in a general case, the magnetic field is focused toward the second resonance antenna at a higher efficiency as compared to a case where the magnetic field that is generated from the primary antenna is radiated to a free space. And, therefore, energy may be transferred to the second resonance antenna from the first resonance antenna at a high efficiency. The magnetic induction method may be implemented similarly to the magnetic resonance method. However, in this case, the frequency of the magnetic field is not required to be a resonance frequency. Nevertheless, in the magnetic induction method, the loops configuring the primary coil and the secondary coil are required to match one another, and the distance between the loops should be very close-ranged.

Although it is not shown in the drawing, the wireless power transmitter (100) may further include a communication antenna. The communication antenna may transmit and/or receive a communication signal by using a communication carrier apart from the magnetic field communication. For example, the communication antenna may transmit and/or receive communication signals corresponding to Wi-Fi, Bluetooth, Bluetooth LE, ZigBee, NFC, and so on.

The communications & control unit (120) may transmit and/or receive information to and from the wireless power receiver (200). The communications & control unit (120) may include at least one of an IB communication module and an OB communication module.

The IB communication module may transmit and/or receive information by using a magnetic wave, which uses a specific frequency as its center frequency. For example, the communications & control unit (120) may perform in-band (IB) communication by transmitting communication information on the operating frequency of wireless power transfer through the primary coil or by receiving communication information on the operating frequency through the primary coil. At this point, the communications & control unit (120) may load information in the magnetic wave or may interpret the information that is carried by the magnetic wave by using a modulation scheme, such as binary phase shift keying (BPSK), Frequency Shift Keying(FSK) or amplitude shift keying (ASK), and so on, or a coding scheme, such as Manchester coding or non-return-to-zero level (NZR-L) coding, and so on. By using the above-described IB communication, the communications & control unit (120) may transmit and/or receive information to distances of up to several meters at a data transmission rate of several kbps.

The OB communication module may also perform out-of-band communication through a communication antenna. For example, the communications & control unit (120) may be provided to a near field communication module. Examples of the near field communication module may include communication modules, such as Wi-Fi, Bluetooth, Bluetooth LE, ZigBee, NFC, and so on.

The communications & control unit (120) may control the overall operations of the wireless power transmitter (100). The communications & control unit (120) may perform calculation and processing of diverse information and may also control each configuration element of the wireless power transmitter (100).

The communications & control unit (120) may be implemented in a computer or a similar device as hardware, software, or a combination of the same. When implemented in the form of hardware, the communications & control unit (120) may be provided as an electronic circuit performing control functions by processing electrical signals. And, when implemented in the form of software, the communications & control unit (120) may be provided as a program that operates the communications & control unit (120).

By controlling the operating point, the communications & control unit (120) may control the transmitted power. The operating point that is being controlled may correspond to a combination of a frequency (or phase), a duty cycle, a duty ratio, and a voltage amplitude. The communications & control unit (120) may control the transmitted power by adjusting any one of the frequency (or phase), the duty cycle, the duty ratio, and the voltage amplitude. Additionally, the wireless power transmitter (100) may supply a consistent level of power, and the wireless power receiver (200) may control the level of received power by controlling the resonance frequency.

The mobile device (450) includes a wireless power receiver (200) receiving wireless power through a secondary coil, and a load (455) receiving and storing the power that is received by the wireless power receiver (200) and supplying the received power to the device.

The wireless power receiver (200) may include a power pick-up unit (210) and a communications & control unit (220). The power pick-up unit (210) may receive wireless power through the secondary coil and may convert the received wireless power to electric energy. The power pick-up unit (210) rectifies the alternating current (AC) signal, which is received through the secondary coil, and converts the rectified signal to a direct current (DC) signal. The communications & control unit (220) may control the transmission and reception of the wireless power (transfer and reception of power).

The secondary coil may receive wireless power that is being transmitted from the wireless power transmitter (100). The secondary coil may receive power by using the magnetic field that is generated in the primary coil. Herein, in case the specific frequency corresponds a resonance frequency, magnetic resonance may occur between the primary coil and the secondary coil, thereby allowing power to be transferred with greater efficiency.

Although it is not shown in FIG. 5, the communications & control unit (220) may further include a communication antenna. The communication antenna may transmit and/or receive a communication signal by using a communication carrier apart from the magnetic field communication. For example, the communication antenna may transmit and/or receive communication signals corresponding to Wi-Fi, Bluetooth, Bluetooth LE, ZigBee, NFC, and so on.

The communications & control unit (220) may transmit and/or receive information to and from the wireless power transmitter (100). The communications & control unit (220) may include at least one of an IB communication module and an OB communication module.

The IB communication module may transmit and/or receive information by using a magnetic wave, which uses a specific frequency as its center frequency. For example, the communications & control unit (220) may perform IB communication by loading information in the magnetic wave and by transmitting the information through the secondary coil or by receiving a magnetic wave carrying information through the secondary coil. At this point, the communications & control unit (120) may load information in the magnetic wave or may interpret the information that is carried by the magnetic wave by using a modulation scheme, such as binary phase shift keying (BPSK), Frequency Shift Keying(FSK) or amplitude shift keying (ASK), and so on, or a coding scheme, such as Manchester coding or non-return-to-zero level (NZR-L) coding, and so on. By using the above-described IB communication, the communications & control unit (220) may transmit and/or receive information to distances of up to several meters at a data transmission rate of several kbps.

The OB communication module may also perform out-of-band communication through a communication antenna. For example, the communications & control unit (220) may be provided to a near field communication module.

Examples of the near field communication module may include communication modules, such as Wi-Fi, Bluetooth, Bluetooth LE, ZigBee, NFC, and so on.

The communications & control unit (220) may control the overall operations of the wireless power receiver (200). The communications & control unit (220) may perform calculation and processing of diverse information and may also control each configuration element of the wireless power receiver (200).

The communications & control unit (220) may be implemented in a computer or a similar device as hardware, software, or a combination of the same. When implemented in the form of hardware, the communications & control unit (220) may be provided as an electronic circuit performing control functions by processing electrical signals. And, when implemented in the form of software, the communications & control unit (220) may be provided as a program that operates the communications & control unit (220).

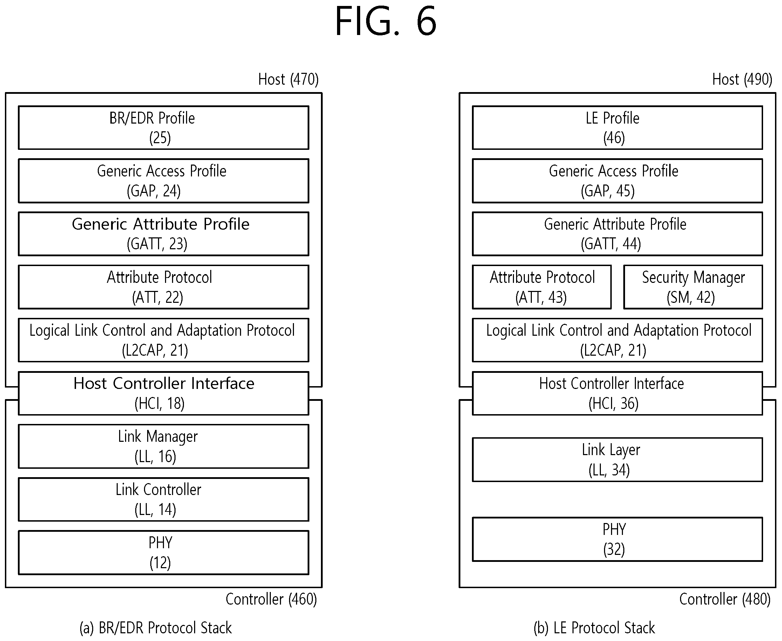

When the communication/control circuit 120 and the communication/control circuit 220 are Bluetooth or Bluetooth LE as an OB communication module or a short-range communication module, the communication/control circuit 120 and the communication/control circuit 220 may each be implemented and operated with a communication architecture as shown in FIG. 6.

FIG. 6 is a diagram illustrating an example of a Bluetooth communication architecture to which an embodiment according to the present disclosure may be applied.

Referring to FIG. 6, (a) of FIG. 6 shows an example of a protocol stack of Bluetooth basic rate (BR)/enhanced data rate (EDR) supporting GATT, and (b) shows an example of Bluetooth low energy (BLE) protocol stack.

Specifically, as shown in (a) of FIG. 6, the Bluetooth BR/EDR protocol stack may include an upper control stack 460 and a lower host stack 470 based on a host controller interface (HCI) 18.

The host stack (or host module) 470 refers to hardware for transmitting or receiving a Bluetooth packet to or from a wireless transmission/reception module which receives a Bluetooth signal of 2.4 GHz, and the controller stack 460 is connected to the Bluetooth module to control the Bluetooth module and perform an operation.

The host stack 470 may include a BR/EDR PHY layer 12, a BR/EDR baseband layer 14, and a link manager layer 16.

The BR/EDR PHY layer 12 is a layer that transmits and receives a 2.4 GHz radio signal, and in the case of using Gaussian frequency shift keying (GFSK) modulation, the BR/EDR PHY layer 12 may transmit data by hopping 79 RF channels.

The BR/EDR baseband layer 14 serves to transmit a digital signal, selects a channel sequence for hopping 1400 times per second, and transmits a time slot with a length of 625 us for each channel.

The link manager layer 16 controls an overall operation (link setup, control, security) of Bluetooth connection by utilizing a link manager protocol (LMP).

The link manager layer 16 may perform the following functions.

- Performs ACL/SCO logical transport, logical link setup, and control.
- Detach: It interrupts connection and informs a counterpart device about a reason for the interruption.
- Performs power control and role switch.
- Performs security (authentication, pairing, encryption) function.

The host controller interface layer 18 provides an interface between a host module and a controller module so that a host provides commands and data to the controller and the controller provides events and data to the host.

The host stack (or host module, 470) includes a logical link control and adaptation protocol (L2CAP) 21, an attribute protocol 22, a generic attribute profile (GATT) 23, a generic access profile (GAP) 24, and a BR/EDR profile 25.

The logical link control and adaptation protocol (L2CAP) 21 may provide one bidirectional channel for transmitting data to a specific protocol or profile.

The L2CAP 21 may multiplex various protocols, profiles, etc., provided from upper Bluetooth.

L2CAP of Bluetooth BR/EDR uses dynamic channels, supports protocol service multiplexer, retransmission, streaming mode, and provides segmentation and reassembly, perchannel flow control, and error control.

The generic attribute profile (GATT) 23 may be operable as a protocol that describes how the attribute protocol 22 is used when services are configured. For example, the generic attribute profile 23 may be operable to specify how ATT attributes are grouped together into services and may be operable to describe features associated with services.

Accordingly, the generic attribute profile 23 and the attribute protocols (ATT) 22 may use features to describe device's state and services, how features are related to each other, and how they are used.

The attribute protocol 22 and the BR/EDR profile 25 define a service (profile) using Bluetooth BR/EDR and an application protocol for exchanging these data, and the generic access profile (GAP) 24 defines device discovery, connectivity, and security level.

As shown in (b) of FIG. 6, the Bluetooth LE protocol stack includes a controller stack 480 operable to process a wireless device interface important in timing and a host stack 490 operable to process high level data.

First, the controller stack 480 may be implemented using a communication module that may include a Bluetooth wireless device, for example, a processor module that may include a processing device such as a microprocessor.

The host stack 490 may be implemented as a part of an OS running on a processor module or as an instantiation of a package on the OS.

In some cases, the controller stack and the host stack may be run or executed on the same processing device in a processor module.

The controller stack 480 includes a physical layer (PHY) 32, a link layer 34, and a host controller interface 36.

The physical layer (PHY, wireless transmission/reception module) 32 is a layer that transmits and receives a 2.4 GHz radio signal and uses Gaussian frequency shift keying (GFSK) modulation and a frequency hopping scheme including 40 RF channels.

The link layer 34, which serves to transmit or receive Bluetooth packets, creates connections between devices after performing advertising and scanning functions using 3 advertising channels and provides a function of exchanging data packets of up to 257 bytes through 37 data channels.

The host stack includes a generic access profile (GAP) 45, a logical link control and adaptation protocol (L2CAP, 41), a security manager (SM) 42, and an attribute protocol (ATT) 43, a generic attribute profile (GATT) 44, a generic access profile 45, and an LE profile 46. However, the host stack 490 is not limited thereto and may include various protocols and profiles.

The host stack multiplexes various protocols, profiles, etc., provided from upper Bluetooth using L2CAP.

First, the logical link control and adaptation protocol (L2CAP) 41 may provide one bidirectional channel for transmitting data to a specific protocol or profile.

The L2CAP 41 may be operable to multiplex data between higher layer protocols, segment and reassemble packages, and manage multicast data transmission.

In Bluetooth LE, three fixed channels (one for signaling CH, one for security manager, and one for attribute protocol) are basically used. Also, a dynamic channel may be used as needed.

Meanwhile, a basic channel/enhanced data rate (BR/EDR) uses a dynamic channel and supports protocol service multiplexer, retransmission, streaming mode, and the like.

The security manager (SM) 42 is a protocol for authenticating devices and providing key distribution.

The attribute protocol (ATT) 43 defines a rule for accessing data of a counterpart device in a server-client structure. The ATT has the following 6 message types (request, response, command, notification, indication, confirmation).

① Request and Response message: A request message is a message for requesting specific information from the client device to the server device, and the response message is a response message to the request message, which is a message transmitted from the server device to the client device.

② Command message: It is a message transmitted from the client device to the server device in order to indicate a command of a specific operation. The server device does not transmit a response with respect to the command message to the client device.

(3) Notification message: It is a message transmitted from the server device to the client device in order to notify an event, or the like. The client device does not transmit a confirmation message with respect to the notification message to the server device.

④ Indication and confirmation message: It is a message transmitted from the server device to the client device in order to notify an event, or the like. Unlike the notification message, the client device transmits a confirmation message regarding the indication message to the server device.

In the present disclosure, when the GATT profile using the attribute protocol (ATT) 43 requests long data, a value regarding a data length is transmitted to allow a client to clearly know the data length, and a characteristic value may be received from a server by using a universal unique identifier (UUID).

The generic access profile (GAP) 45, a layer newly implemented for the Bluetooth LE technology, is used to select a role for communication between Bluetooth LED devices and to control how a multi-profile operation takes place.

Also, the generic access profile (GAP) 45 is mainly used for device discovery, connection generation, and security procedure part, defines a scheme for providing information to a user, and defines types of attributes as follows.

① Service: It defines a basic operation of a device by a combination of behaviors related to data

② Include: It defines a relationship between services

③ Characteristics: It is a data value used in a server

④ Behavior: It is a format that may be read by a computer defined by a UUID (value type).

The LE profile 46, including profiles dependent upon the GATT, is mainly applied to a Bluetooth LE device. The LE profile 46 may include, for example, Battery, Time, FindMe, Proximity, Time, Object Delivery Service, and the like, and details of the GATT-based profiles are as follows.

① Battery: Battery information exchanging method

② Time: Time information exchanging method

③ FindMe: Provision of alarm service according to distance

④ Proximity: Battery information exchanging method

(5) Time: Time information exchanging method

The generic attribute profile (GATT) 44 may operate as a protocol describing how the attribute protocol (ATT) 43 is used when services are configured. For example, the GATT 44 may operate to define how ATT attributes are grouped together with services and operate to describe features associated with services.

Thus, the GATT 44 and the ATT 43 may use features in order to describe status and services of a device and describe how the features are related and used.

Hereinafter, procedures of the Bluetooth low energy (BLE) technology will be briefly described.

The BLE procedure may be classified as a device filtering procedure, an advertising procedure, a scanning procedure, a discovering procedure, and a connecting procedure.

**Device Filtering Procedure**

The device filtering procedure is a method for reducing the number of devices performing a response with respect to a request, indication, notification, and the like, in the controller stack.

When requests are received from all the devices, it is not necessary to respond thereto, and thus, the controller stack may perform control to reduce the number of transmitted requests to reduce power consumption.

An advertising device or scanning device may perform the device filtering procedure to limit devices for receiving an advertising packet, a scan request or a connection request.

Here, the advertising device refers to a device transmitting an advertising event, that is, a device performing an advertisement and is also termed an advertiser.

The scanning device refers to a device performing scanning, that is, a device transmitting a scan request.

In the BLE, in a case in which the scanning device receives some advertising packets from the advertising device, the scanning device should transmit a scan request to the advertising device.

However, in a case in which a device filtering procedure is used so a scan request transmission is not required, the scanning device may disregard the advertising packets transmitted from the advertising device.

Even in a connection request process, the device filtering procedure may be used. In a case in which device filtering is used in the connection request process, it is not necessary to transmit a response with respect to the connection request by disregarding the connection request.

**Advertising Procedure**

The advertising device performs an advertising procedure to perform undirected broadcast to devices within a region.

Here, the undirected broadcast is advertising toward all the devices, rather than broadcast toward a specific device, and all the devices may scan advertising to make an supplemental information request or a connection request.

In contrast, directed advertising may make an supplemental information request or a connection request by scanning advertising for only a device designated as a reception device.

The advertising procedure is used to establish a Bluetooth connection with an initiating device nearby.

Or, the advertising procedure may be used to provide periodical broadcast of user data to scanning devices performing listening in an advertising channel.

In the advertising procedure, all the advertisements (or advertising events) are broadcast through an advertisement physical channel.

The advertising devices may receive scan requests from listening devices performing listening to obtain additional user data from advertising devices. The advertising devices transmit responses with respect to the scan requests to the devices which have transmitted the scan requests, through the same advertising physical channels as the advertising physical channels in which the scan requests have been received.

Broadcast user data sent as part of advertising packets are dynamic data, while the scan response data is generally static data.

The advertisement device may receive a connection request from an initiating device on an advertising (broadcast) physical channel. If the advertising device has used a connectable advertising event and the initiating device has not been filtered according to the device filtering procedure, the advertising device may stop advertising and enter a connected mode. The advertising device may start advertising after the connected mode.

**Scanning Procedure**

A device performing scanning, that is, a scanning device performs a scanning procedure to listen to undirected broadcasting of user data from advertising devices using an advertising physical channel.

The scanning device transmits a scan request to an advertising device through an advertising physical channel in order to request additional data from the advertising device. The advertising device transmits a scan response as a response with respect to the scan request, by including additional user data which has requested by the scanning device through an advertising physical channel.

The scanning procedure may be used while being connected to other BLE device in the BLE piconet.

If the scanning device is in an initiator mode in which the scanning device may receive an advertising event and initiates a connection request. The scanning device may transmit a connection request to the advertising device through the advertising physical channel to start a Bluetooth connection with the advertising device.

When the scanning device transmits a connection request to the advertising device, the scanning device stops the initiator mode scanning for additional broadcast and enters the connected mode.

**Discovering Procedure**

Devices available for Bluetooth communication (hereinafter, referred to as "Bluetooth devices") perform an advertising procedure and a scanning procedure in order to discover devices located nearby or in order to be discovered by other devices within a given area.

The discovering procedure is performed asymmetrically. A Bluetooth device intending to discover other device nearby is termed a discovering device, and listens to discover devices advertising an advertising event that may be scanned. A Bluetooth device which may be discovered by other device and available to be used is termed a discoverable device and positively broadcasts an advertising event such that it may be scanned by other device through an advertising (broadcast) physical channel.

Both the discovering device and the discoverable device may have already been connected with other Bluetooth devices in a piconet.

**Connecting Procedure**

A connecting procedure is asymmetrical, and requests that, while a specific Bluetooth device is performing an advertising procedure, another Bluetooth device should perform a scanning procedure.

That is, an advertising procedure may be aimed, and as a result, only one device may response to the advertising. After a connectable advertising event is received from an advertising device, a connecting request may be transmitted to the advertising device through an advertising (broadcast) physical channel to initiate connection.

Hereinafter, operational states, that is, an advertising state, a scanning state, an initiating state, and a connection state, in the BLE technology will be briefly described.

**Advertising State**

A link layer (LL) enters an advertising state according to an instruction from a host (stack). In a case in which the LL is in the advertising state, the LL transmits an advertising packet data unit (PDU) in advertising events.

Each of the advertising events include at least one advertising PDU, and the advertising PDU is transmitted through an advertising channel index in use. After the advertising PDU is transmitted through an advertising channel index in use, the advertising event may be terminated, or in a case in which the advertising device may need to secure a space for performing other function, the advertising event may be terminated earlier.

**Scanning State**

The LL enters the scanning state according to an instruction from the host (stack). In the scanning state, the LL listens to advertising channel indices.

The scanning state includes two types: passive scanning and active scanning. Each of the scanning types is determined by the host.

Time for performing scanning or an advertising channel index are not defined.

During the scanning state, the LL listens to an advertising channel index in a scan window duration. A scan interval is defined as an interval between start points of two continuous scan windows.

When there is no collision in scheduling, the LL should listen in order to complete all the scan intervals of the scan window as instructed by the host. In each scan window, the LL should scan other advertising channel index. The LL uses every available advertising channel index.

In the passive scanning, the LL only receives packets and cannot transmit any packet.

In the active scanning, the LL performs listening in order to be relied on an advertising PDU type for requesting advertising PDUs and advertising device-related supplemental information from the advertising device.

### Initiating State

The LL enters the initiating state according to an instruction from the host (stack).

When the LL is in the initiating state, the LL performs listening on advertising channel indices.

During the initiating state, the LL listens to an advertising channel index during the scan window interval.

### Connection State

When the device performing a connection state, that is, when the initiating device transmits a CONNECT_REQ PDU to the advertising device or when the advertising device receives a CONNECT_REQ PDU from the initiating device, the LL enters a connection state.

It is considered that a connection is generated after the LL enters the connection state. However, it is not necessary to consider that the connection should be established at a point in time at which the LL enters the connection state. The only difference between a newly generated connection and an already established connection is a LL connection supervision timeout value.

When two devices are connected, the two devices play different roles.

An LL serving as a master is termed a master, and an LL serving as a slave is termed a slave. The master adjusts a timing of a connecting event, and the connecting event refers to a point in time at which the master and the slave are synchronized.

Hereinafter, packets defined in an Bluetooth interface will be briefly described. BLE devices use packets defined as follows.

### Packet Format

The LL has only one packet format used for both an advertising channel packet and a data channel packet.

Each packet includes four fields of a preamble, an access address, a PDU, and a CRC.

When one packet is transmitted in an advertising physical channel, the PDU may be an advertising channel PDU, and when one packet is transmitted in a data physical channel, the PDU may be a data channel PDU.

### Advertising Channel PDU

An advertising channel PDU has a 16-bit header and payload having various sizes.

A PDU type field of the advertising channel PDU included in the heater indicates PDU types defined in Table 3 below.

[Table 3]

| PDU Type | Packet Name |
|----------|-------------|
| 0000 | ADV_IND |
| 0001 | ADV_DIRECT_IND |
| 0010 | ADV_NONCONN_IND |
| 0011 | SCAN_REQ |
| 0100 | SCAN_RSP |

(continued)

| PDU Type | Packet Name |
|----------|-------------|
| 0101 | CONNECT_REQ |
| 0110 | ADV_SCAN_IND |
| 0111-1111 | Reserved |

**Advertising PDU**

The following advertising channel PDU types are termed advertising PDUs and used in a specific event.

ADV_IND: Connectable undirected advertising event
ADV_DIRECT_IND: Connectable directed advertising event
ADV_NONCONN_IND: Unconnectable undirected advertising event
ADV_SCAN_IND: Scannable undirected advertising event

The PDUs are transmitted from the LL in an advertising state, and received by the LL in a scanning state or in an initiating state.

**Scanning PDU**

The following advertising channel DPU types are termed scanning PDUs and are used in a state described hereinafter.
SCAN_REQ: Transmitted by the LL in a scanning state and received by the LL in an advertising state.
SCAN_RSP: Transmitted by the LL in the advertising state and received by the LL in the scanning state.

**Initiating PDU**

The following advertising channel PDU type is termed an initiating PDU.
CONNECT_REQ: Transmitted by the LL in the initiating state and received by the LL in the advertising state.

**Data Channel PDU**

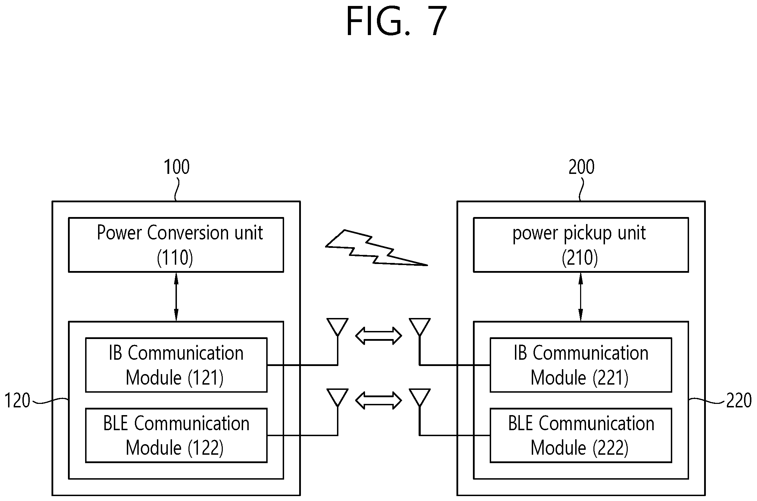

The data channel PDU may include a message integrity check (MIC) field having a 16-bit header and payload having various sizes.
The procedures, states, and packet formats in the BLE technology discussed above may be applied to perform the methods proposed in the present disclosure.
Referring to FIG. 5, the load (455) may correspond to a battery. The battery may store energy by using the power that is being outputted from the power pick-up unit (210). Meanwhile, the battery is not mandatorily required to be included in the mobile device (450). For example, the battery may be provided as a detachable external feature. As another example, the wireless power receiver may include an operating means that may execute diverse functions of the electronic device instead of the battery.
As shown in the drawing, although the mobile device (450) is illustrated to be included in the wireless power receiver (200) and the base station (400) is illustrated to be included in the wireless power transmitter (100), in a broader meaning, the wireless power receiver (200) may be identified (or regarded) as the mobile device (450), and the wireless power transmitter (100) may be identified (or regarded) as the base station (400).
When the communication/control circuit 120 and the communication/control circuit 220 include Bluetooth or Bluetooth LE as an OB communication module or a short-range communication module in addition to the IB communication module, the wireless power transmitter 100 including the communication/control circuit 120 and the wireless power receiver 200 including the communication/control circuit 220 may be represented by a simplified block diagram as shown in FIG. 7.
FIG. 7 is a block diagram illustrating a wireless power transfer system using BLE communication according to an example.
Referring to FIG. 7, the wireless power transmitter 100 includes a power conversion circuit 110 and a communication/control circuit 120. The communication/control circuit 120 includes an in-band communication module 121 and a BLE communication module 122.

Meanwhile, the wireless power receiver 200 includes a power pickup circuit 210 and a communication/control circuit 220. The communication/control circuit 220 includes an in-band communication module 221 and a BLE communication module 222.

In one aspect, the BLE communication modules 122 and 222 perform the architecture and operation according to FIG. 6. For example, the BLE communication modules 122 and 222 may be used to establish a connection between the wireless power transmitter 100 and the wireless power receiver 200 and exchange control information and packets necessary for wireless power transfer.

In another aspect, the communication/control circuit 120 may be configured to operate a profile for wireless charging. Here, the profile for wireless charging may be GATT using BLE transmission.

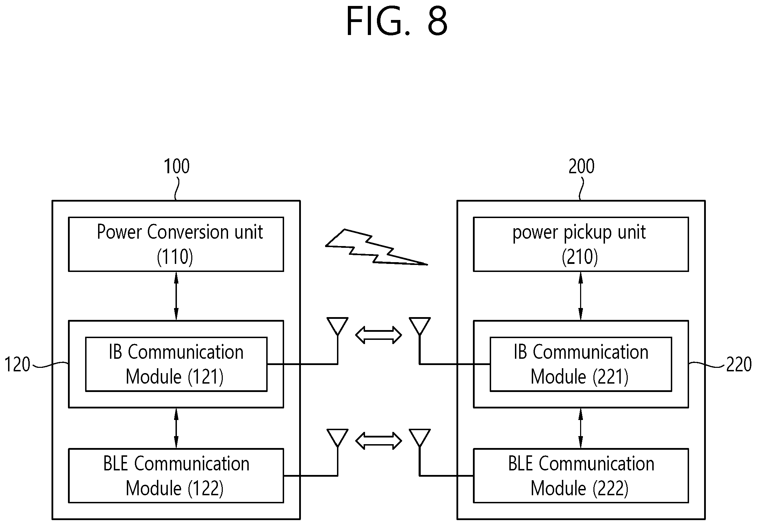

FIG. 8 is a block diagram illustrating a wireless power transfer system using BLE communication according to another example.

Referring to FIG. 8, the communication/control circuits 120 and 220 respectively include only in-band communication modules 121 and 221, and the BLE communication modules 122 and 222 may be provided to be separated from the communication/control circuits 120 and 220.

Hereinafter, the coil or coil unit includes a coil and at least one device being approximate to the coil, and the coil or coil unit may also be referred to as a coil assembly, a coil cell, or a cell.

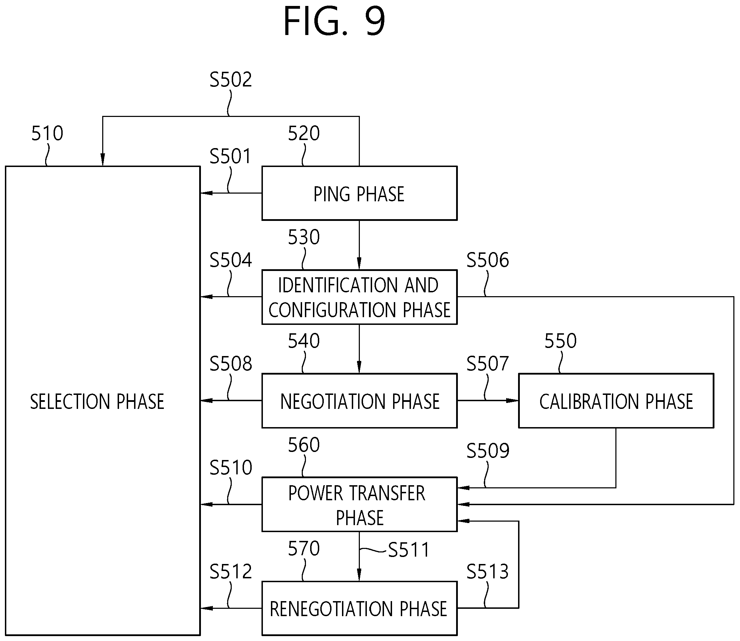

FIG. 9 is a state transition diagram for describing a wireless power transfer procedure.

Referring to FIG. 9, the power transfer (or transfer) from the wireless power transmitter to the wireless power receiver according to an exemplary embodiment of the present disclosure may be broadly divided into a selection phase (510), a ping phase (520), an identification and configuration phase (530), a negotiation phase (540), a calibration phase (550), a power transfer phase (560), and a renegotiation phase (570).

If a specific error or a specific event is detected when the power transfer is initiated or while maintaining the power transfer, the selection phase (510) may include a shifting phase (or step) - reference numerals S502, S504, S508, S510, and S512. Herein, the specific error or specific event will be specified in the following description. Additionally, during the selection phase (510), the wireless power transmitter may monitor whether or not an object exists on an interface surface. If the wireless power transmitter detects that an object is placed on the interface surface, the process step may be shifted to the ping phase (520). During the selection phase (510), the wireless power transmitter may transmit an analog ping having a power signal(or a pulse) corresponding to an extremely short duration, and may detect whether or not an object exists within an active area of the interface surface based on a current change in the transmitting coil or the primary coil.

In case an object is sensed (or detected) in the selection phase (510), the wireless power transmitter may measure a quality factor of a wireless power resonance circuit (e.g., power transfer coil and/or resonance capacitor). According to the exemplary embodiment of the present disclosure, during the selection phase (510), the wireless power transmitter may measure the quality factor in order to determine whether or not a foreign object exists in the charging area along with the wireless power receiver. In the coil that is provided in the wireless power transmitter, inductance and/or components of the series resistance may be reduced due to a change in the environment, and, due to such decrease, a value of the quality factor may also be decreased. In order to determine the presence or absence of a foreign object by using the measured quality factor value, the wireless power transmitter may receive from the wireless power receiver a reference quality factor value, which is measured in advance in a state where no foreign object is placed within the charging area. The wireless power transmitter may determine the presence or absence of a foreign object by comparing the measured quality factor value with the reference quality factor value, which is received during the negotiation phase (540). However, in case of a wireless power receiver having a low reference quality factor value - e.g., depending upon its type, purpose, characteristics, and so on, the wireless power receiver may have a low reference quality factor value - in case a foreign object exists, since the difference between the reference quality factor value and the measured quality factor value is small (or insignificant), a problem may occur in that the presence of the foreign object cannot be easily determined. Accordingly, in this case, other determination factors should be further considered, or the present or absence of a foreign object should be determined by using another method.

According to another exemplary embodiment of the present disclosure, in case an object is sensed (or detected) in the selection phase (510), in order to determine whether or not a foreign object exists in the charging area along with the wireless power receiver, the wireless power transmitter may measure the quality factor value within a specific frequency area (e.g., operation frequency area). In the coil that is provided in the wireless power transmitter, inductance and/or components of the series resistance may be reduced due to a change in the environment, and, due to such decrease, the resonance frequency of the coil of the wireless power transmitter may be changed (or shifted). More specifically, a quality factor peak frequency that corresponds to a frequency in which a maximum quality factor value is measured within the operation frequency band may be moved (or shifted).

In the ping phase (520), if the wireless power transmitter detects the presence of an object, the transmitter activates (or Wakes up) a receiver and transmits a digital ping for identifying whether or not the detected object corresponds to the wireless power receiver. During the ping phase (520), if the wireless power transmitter fails to receive a response signal for the digital ping - e.g., a signal intensity packet - from the receiver, the process may be shifted back to the selection phase (510). Additionally, in the ping phase (520), if the wireless power transmitter receives a signal indicating the completion of the power transfer - e.g., charging complete packet - from the receiver, the process may be shifted back to the selection phase (510).

If the ping phase (520) is completed, the wireless power transmitter may shift to the identification and configuration phase (530) for identifying the receiver and for collecting configuration and status information.

In the identification and configuration phase (530), if the wireless power transmitter receives an unwanted packet (i.e., unexpected packet), or if the wireless power transmitter fails to receive a packet during a predetermined period of time (i.e., out of time), or if a packet transmission error occurs (i.e., transmission error), or if a power transfer contract is not configured (i.e., no power transfer contract), the wireless power transmitter may shift to the selection phase (510).

The wireless power transmitter may confirm (or verify) whether or not its entry to the negotiation phase (540) is needed based on a Negotiation field value of the configuration packet, which is received during the identification and configuration phase (530). Based on the verified result, in case a negotiation is needed, the wireless power transmitter enters the negotiation phase (540) and may then perform a predetermined FOD detection procedure. Conversely, in case a negotiation is not needed, the wireless power transmitter may immediately enter the power transfer phase (560).

In the negotiation phase (540), the wireless power transmitter may receive a Foreign Object Detection (FOD) status packet that includes a reference quality factor value. Or, the wireless power transmitter may receive an FOD status packet that includes a reference peak frequency value. Alternatively, the wireless power transmitter may receive a status packet that includes a reference quality factor value and a reference peak frequency value. At this point, the wireless power transmitter may determine a quality coefficient threshold value for FO detection based on the reference quality factor value. The wireless power transmitter may determine a peak frequency threshold value for FO detection based on the reference peak frequency value.

The wireless power transmitter may detect the presence or absence of an FO in the charging area by using the determined quality coefficient threshold value for FO detection and the currently measured quality factor value (i.e., the quality factor value that was measured before the ping phase), and, then, the wireless power transmitter may control the transmitted power in accordance with the FO detection result. For example, in case the FO is detected, the power transfer may be stopped. However, the present disclosure will not be limited only to this.

The wireless power transmitter may detect the presence or absence of an FO in the charging area by using the determined peak frequency threshold value for FO detection and the currently measured peak frequency value (i.e., the peak frequency value that was measured before the ping phase), and, then, the wireless power transmitter may control the transmitted power in accordance with the FO detection result. For example, in case the FO is detected, the power transfer may be stopped. However, the present disclosure will not be limited only to this.

In case the FO is detected, the wireless power transmitter may return to the selection phase (510). Conversely, in case the FO is not detected, the wireless power transmitter may proceed to the calibration phase (550) and may, then, enter the power transfer phase (560). More specifically, in case the FO is not detected, the wireless power transmitter may determine the intensity of the received power that is received by the receiving end during the calibration phase (550) and may measure power loss in the receiving end and the transmitting end in order to determine the intensity of the power that is transmitted from the transmitting end. In other words, during the calibration phase (550), the wireless power transmitter may estimate the power loss based on a difference between the transmitted power of the transmitting end and the received power of the receiving end. The wireless power transmitter according to the exemplary embodiment of the present disclosure may calibrate the threshold value for the FOD detection by applying the estimated power loss.

In the power transfer phase (560), in case the wireless power transmitter receives an unwanted packet (i.e., unexpected packet), or in case the wireless power transmitter fails to receive a packet during a predetermined period of time (i.e., time-out), or in case a violation of a predetermined power transfer contract occurs (i.e., power transfer contract violation), or in case charging is completed, the wireless power transmitter may shift to the selection phase (510).

Additionally, in the power transfer phase (560), in case the wireless power transmitter is required to reconfigure the power transfer contract in accordance with a status change in the wireless power transmitter, the wireless power transmitter may shift to the renegotiation phase (570). At this point, if the renegotiation is successfully completed, the wireless power transmitter may return to the power transfer phase (560).

In this embodiment, the calibration step 550 and the power transfer phase 560 are divided into separate steps, but the calibration step 550 may be integrated into the power transfer phase 560. In this case, operations in the calibration step 550 may be performed in the power transfer phase 560.

The above-described power transfer contract may be configured based on the status and characteristic information of the wireless power transmitter and receiver. For example, the wireless power transmitter status information may include information on a maximum amount of transmittable power, information on a maximum number of receivers that may be accommodated, and so on. And, the receiver status information may include information on the required power, and so on.

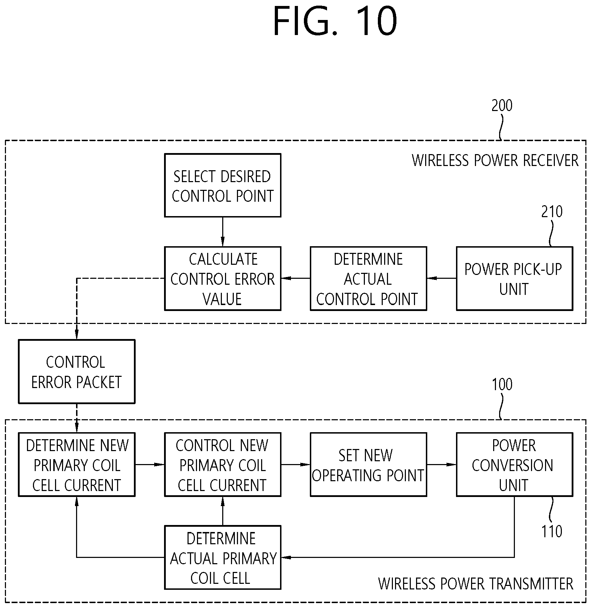

FIG. 10 shows a power control method according to an exemplary embodiment of the present disclosure.

As shown in FIG. 10, in the power transfer phase (560), by alternating the power transfer and/or reception and communication, the wireless power transmitter (100) and the wireless power receiver (200) may control the amount (or size) of the power that is being transferred. The wireless power transmitter and the wireless power receiver operate at a specific control point. The control point indicates a combination of the voltage and the electric current that are provided from the output of the wireless power receiver, when the power transfer is performed.

More specifically, the wireless power receiver selects a desired control point, a desired output current/voltage, a temperature at a specific location of the mobile device, and so on, and additionally determines an actual control point at which the receiver is currently operating. The wireless power receiver calculates a control error value by using the desired control point and the actual control point, and, then, the wireless power receiver may transmit the calculated control error value to the wireless power transmitter as a control error packet.

Also, the wireless power transmitter may configure/control a new operating point - amplitude, frequency, and duty cycle - by using the received control error packet, so as to control the power transfer. Therefore, the control error packet may be transmitted/received at a constant time interval during the power transfer phase, and, according to the exemplary embodiment, in case the wireless power receiver attempts to reduce the electric current of the wireless power transmitter, the wireless power receiver may transmit the control error packet by setting the control error value to a negative number. And, in case the wireless power receiver intends to increase the electric current of the wireless power transmitter, the wireless power receiver transmit the control error packet by setting the control error value to a positive number. During the induction mode, by transmitting the control error packet to the wireless power transmitter as described above, the wireless power receiver may control the power transfer.

In the resonance mode, which will hereinafter be described in detail, the device may be operated by using a method that is different from the induction mode. In the resonance mode, one wireless power transmitter should be capable of serving a plurality of wireless power receivers at the same time. However, in case of controlling the power transfer just as in the induction mode, since the power that is being transferred is controlled by a communication that is established with one wireless power receiver, it may be difficult to control the power transfer of additional wireless power receivers. Therefore, in the resonance mode according to the present disclosure, a method of controlling the amount of power that is being received by having the wireless power transmitter commonly transfer (or transmit) the basic power and by having the wireless power receiver control its own resonance frequency. Nevertheless, even during the operation of the resonance mode, the method described above in FIG. 10 will not be completely excluded. And, additional control of the transmitted power may be performed by using the method of FIG. 10.

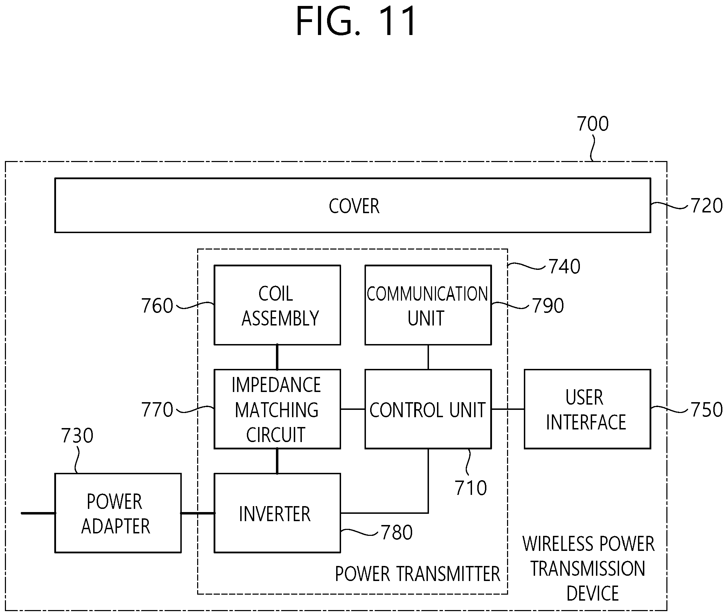

FIG. 11 is a block diagram of a wireless power transmitter according to another exemplary embodiment of the present disclosure.

This may belong to a wireless power transfer system that is being operated in the magnetic resonance mode or the shared mode. The shared mode may refer to a mode performing a severalfor-one (or one-to-many) communication and charging between the wireless power transmitter and the wireless power receiver. The shared mode may be implemented as a magnetic induction method or a resonance method.

Referring to FIG. 11, the wireless power transmitter (700) may include at least one of a cover (720) covering a coil assembly, a power adapter (730) supplying power to the power transmitter (740), a power transmitter (740) transmitting wireless power, and a user interface (750) providing information related to power transfer processing and other related information. Most particularly, the user interface (750) may be optionally included or may be included as another user interface (750) of the wireless power transmitter (700).

The power transmitter (740) may include at least one of a coil assembly (760), an impedance matching circuit (770), an inverter (780), a communication unit (790), and a control unit (710).

The coil assembly (760) includes at least one primary coil generating a magnetic field. And, the coil assembly (760) may also be referred to as a coil cell.

The impedance matching circuit (770) may provide impedance matching between the inverter and the primary coil(s). The impedance matching circuit (770) may generate resonance from a suitable frequency that boosts the electric current of the primary coil(s). In a multi-coil power transmitter (740), the impedance matching circuit may additionally include a multiplex that routes signals from the inverter to a subset of the primary coils. The impedance matching circuit may also be referred to as a tank circuit.

The impedance matching circuit (770) may include a capacitor, an inductor, and a switching device that switches the connection between the capacitor and the inductor. The impedance matching may be performed by detecting a reflective wave of the wireless power that is being transferred (or transmitted) through the coil assembly (760) and by switching the switching device based on the detected reflective wave, thereby adjusting the connection status of the capacitor or the inductor or adjusting the capacitance of the capacitor or adjusting the inductance of the inductor. In some cases, the impedance matching may be carried out even though the impedance matching circuit (770) is omitted. This specification also includes an exemplary embodiment of the wireless power transmitter (700), wherein the impedance matching circuit (770) is omitted.

The inverter (780) may convert a DC input to an AC signal. The inverter (780) may be operated as a half-bridge inverter or a full-bridge inverter in order to generate a pulse wave and a duty cycle of an adjustable frequency. Additionally, the inverter may include a plurality of stages in order to adjust input voltage levels.

The communication unit (790) may perform communication with the power receiver. The power receiver performs load modulation in order to communicate requests and information corresponding to the power transmitter. Therefore, the power transmitter (740) may use the communication unit (790) so as to monitor the amplitude and/or phase of the electric current and/or voltage of the primary coil in order to demodulate the data being transmitted from the power receiver.

Additionally, the power transmitter (740) may control the output power to that the data may be transferred through the communication unit (790) by using a Frequency Shift Keying (FSK) method, and so on.

The control unit (710) may control communication and power transfer (or delivery) of the power transmitter (740). The control unit (710) may control the power transfer by adjusting the above-described operating point. The operating point may be determined by, for example, at least any one of the operation frequency, the duty cycle, and the input voltage.

The communication unit (790) and the control unit (710) may each be provided as a separate unit/device/chipset or may be collectively provided as one unit/device/chipset.

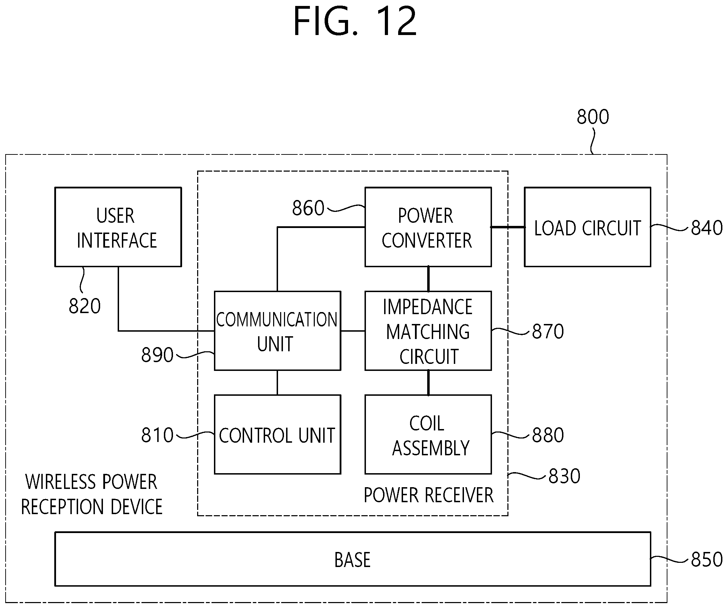

FIG. 12 shows a wireless power receiver according to another exemplary embodiment of the present disclosure.

This may belong to a wireless power transfer system that is being operated in the magnetic resonance mode or the shared mode.

Referring to FIG. 12, the wireless power receiver (800) may include at least one of a user interface (820) providing information related to power transfer processing and other related information, a power receiver (830) receiving wireless power, a load circuit (840), and a base (850) supporting and covering the coil assembly. Most particularly, the user interface (820) may be optionally included or may be included as another user interface (820) of the wireless power receiver (800).

The power receiver (830) may include at least one of a power converter (860), an impedance matching circuit (870), a coil assembly (880), a communication unit (890), and a control unit (810).

The power converter (860) may convert the AC power that is received from the secondary coil to a voltage and electric current that are suitable for the load circuit. According to an exemplary embodiment, the power converter (860) may include a rectifier. The rectifier may rectify the received wireless power and may convert the power from an alternating current (AC) to a direct current (DC). The rectifier may convert the alternating current to the direct current by using a diode or a transistor, and, then, the rectifier may smooth the converted current by using the capacitor and resistance. Herein, a full-wave rectifier, a half-wave rectifier, a voltage multiplier, and so on, that are implemented as a bridge circuit may be used as the rectifier. Additionally, the power converter may adapt a reflected impedance of the power receiver.

The impedance matching circuit (870) may provide impedance matching between a combination of the power converter (860) and the load circuit (840) and the secondary coil. According to an exemplary embodiment, the impedance matching circuit may generate a resonance of approximately 100kHz, which may reinforce the power transfer. The impedance matching circuit (870) may include a capacitor, an inductor, and a switching device that switches the combination of the capacitor and the inductor. The impedance matching may be performed by controlling the switching device of the circuit that configured the impedance matching circuit (870) based on the voltage value, electric current value, power value, frequency value, and so on, of the wireless power that is being received. In some cases, the impedance matching may be carried out even though the impedance matching circuit (870) is omitted. This specification also includes an exemplary embodiment of the wireless power receiver (200), wherein the impedance matching circuit (870) is omitted.

The coil assembly (880) includes at least one secondary coil, and, optionally, the coil assembly (880) may further include an element shielding the metallic part of the receiver from the magnetic field.

The communication unit (890) may perform load modulation in order to communicate requests and other information to the power transmitter.

For this, the power receiver (830) may perform switching of the resistance or capacitor so as to change the reflected impedance.

The control unit (810) may control the received power. For this, the control unit (810) may determine/calculate a difference between an actual operating point and a target operating point of the power receiver (830). Thereafter, by performing a request for adjusting the reflected impedance of the power transmitter and/or for adjusting an operating point of the power transmitter, the difference between the actual operating point and the target operating point may be adjusted/reduced. In case of minimizing this difference, an optimal power reception may be performed.

The communication unit (890) and the control unit (810) may each be provided as a separate device/chipset or may be collectively provided as one device/chipset.

As described in FIG. 9 etc., the wireless power transmitter and the wireless power receiver go through a Ping Phase and a Configuration Phase to enter the Negotiation Phase, or may go through a ping phase, a configuration phase, and a negotiation phase to enter a power transfer phase and then to a re-negotiation phase.

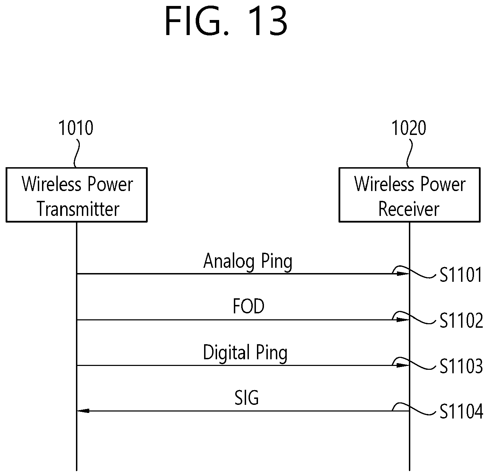

FIG. 13 is a flowchart schematically illustrating a protocol of a ping phase according to an embodiment.

Referring to FIG. 13, in the ping phase, the wireless power transmitter 1010 checks whether an object exists in an operating volume by transmitting an analog ping (S1101). The wireless power transmitter 1010 may detect whether an object exists in the working space based on a change in current of a transmission coil or a primary coil.

If it is determined that an object exists in the operating volume by analog ping, the wireless power transmitter 1010 may perform foreign object detection (FOD) before power transmission to check whether a foreign object exists in the operating volume (S1102). The wireless power transmitter 1010 may perform an operation for protecting the NFC card and/or the RFID tag.

Thereafter, the wireless power transmitter 1010 identifies the wireless power receiver 1020 by transmitting a digital ping (S1103). The wireless power receiver 1020 recognizes the wireless power transmitter 1010 by receiving the digital ping.

The wireless power receiver 1020 that has received the digital ping transmits a signal strength data packet (SIG) to the wireless power transmitter 1010 (S1104).

The wireless power transmitter 1010 receiving the SIG from the wireless power receiver 1020 may identify that the wireless power receiver 1020 is located in the operating volume.

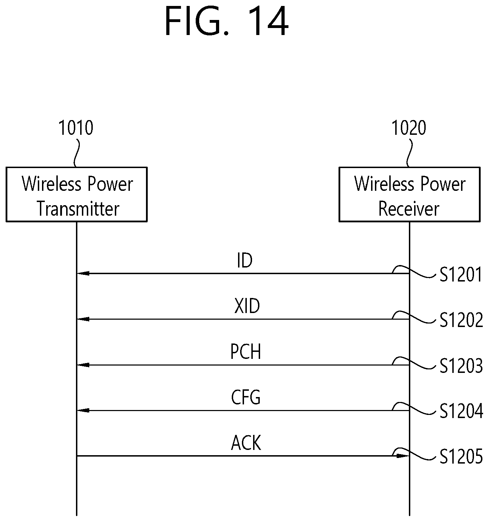

FIG. 14 is a flowchart schematically illustrating a protocol of a configuration phase according to an embodiment.

In the configuration phase (or identification and configuration phase), the wireless power receiver 1020 transmits its identification information to the wireless power transmitter 1010, the wireless power receiver 1020 and the wireless power transmitter 1010 may establish a baseline Power Transfer Contract.

Referring to FIG. 14, in the configuration phase, the wireless power receiver 1020 may transmit an identification data packet (ID) to the wireless power transmitter 1010 to identify itself (S1201). In addition, the wireless power receiver 1020 may transmit an XID (Extended Identification data packet) to the wireless power transmitter 1010 (S1202). In addition, the wireless power receiver 1020 may transmit a power control hold-off data packet (PCH) to the wireless power transmitter 1010 for a power transfer contract (S1203). In addition, the wireless power receiver 1020 may transmit a configuration data packet (CFG) to the wireless power transmitter (S1204).

In accordance with the Extended Protocol for EPP, the wireless power transmitter 1010 may transmit an ACK in response to the CFG (S1205).

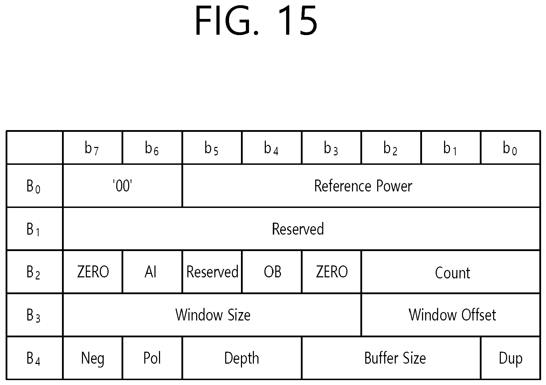

FIG. 15 is a diagram illustrating a message field of a configuration packet (CFG) of a wireless power receiver according to an embodiment.

A configuration packet (CFG) according to an embodiment may have a header value of 0x51 and may include a message field of 5 bytes, referring to FIG. 15.

Referring to FIG. 15, the message field of the configuration packet CFG may include a 1-bit authentication (AI) flag, and a 1-bit out-of-band (OB) flag.

The authentication flag AI indicates whether the wireless power receiver 1020 supports the authentication function. For example, if the value of the authentication flag AI is '1', it indicates that the wireless power receiver 1020 supports an authentication function or operates as an authentication initiator, if the value of the authentication flag AI is '0', it may indicate that the wireless power receiver 1020 does not support an authentication function or cannot operate as an authentication initiator.

The out-band (OB) flag indicates whether the wireless power receiver 1020 supports out-band communication. For example, if the value of the out-band (OB) flag is '1', the wireless power receiver 1020 instructs out-band communication, if the value of the out-band (OB) flag is '0', it may indicate that the wireless power receiver 1020 does not support out-band communication.

In the configuration phase, the wireless power transmitter 1010 may receive the configuration packet (CFG) of the wireless power receiver 1020 and check whether the wireless power receiver 1020 supports an authentication function and supports out-of-band communication.

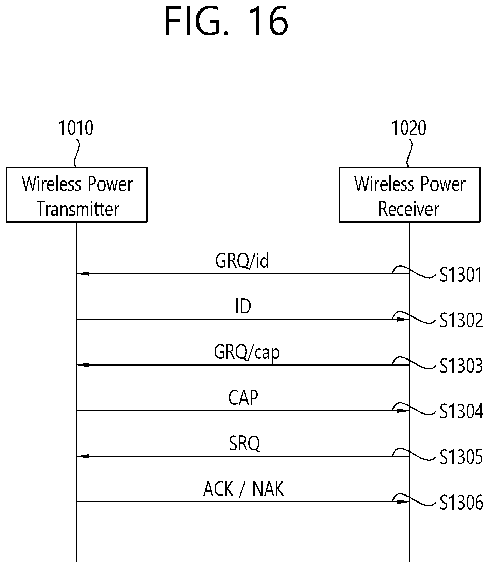

FIG. 16 is a flowchart schematically illustrating a protocol of a negotiation step or a renegotiation step according to an embodiment.

In the negotiation phase or renegotiation phase, the power transfer contract related to the reception/transmission of wireless power between the wireless power receiver and the wireless power transmitter is expanded or changed, or a renewal of the power transfer contract is made that adjusts at least some of the elements of the power transfer contract, or exchange of information for establishing out-band communication may be performed.

Referring to FIG. 16, in the negotiation phase, the wireless power receiver 1020 may receive an identification data packet (ID) and a capabilities data packet (CAP) of the wireless power transmitter 1010 using a general request data packet (GRQ).

The general request packet (GRQ) may have a header value of 0x07 and may include a 1-byte message field. The message field of the general request packet (GRQ) may include a header value of a data packet that the wireless power receiver 1020 requests from the wireless power transmitter 1010 using the GRQ packet. For example, when the wireless power receiver 1020 requests an ID packet of the wireless power transmitter 1010 using a GRQ packet, the wireless power receiver 1020 transmits a general request packet (GRQ/id) including a header value (0x30) of the ID packet of the wireless power transmitter 1010 in the message field of the general request packet (GRQ).

Referring to FIG. 16, in the negotiation phase or renegotiation phase, the wireless power receiver 1020 may transmit a GRQ packet (GRQ/id) requesting the ID packet of the wireless power transmitter 1010 to the wireless power transmitter 1010 (S1301).

The wireless power transmitter 1010 receiving the GRQ/id may transmit the ID packet to the wireless power receiver 1020 (S1302). The ID packet of the wireless power transmitter 1010 includes information on the Manufacturer Code. The ID packet including information on the Manufacturer Code allows the manufacturer of the wireless power transmitter 1010 to be identified.

Referring to FIG. 16, in the negotiation phase or renegotiation phase, the wireless power receiver 1020 may transmit a GRQ packet (GRQ/cap) requesting a capability packet (CAP) of the wireless power transmitter 1010 to the wireless power transmitter 1010 (S 1303). The message field of the GRQ/cap may include a header value (0x31) of the capability packet (CAP).

The wireless power transmitter 1010 receiving the GRQ/cap may transmit a capability packet (CAP) to the wireless power receiver 1020 (S1304).

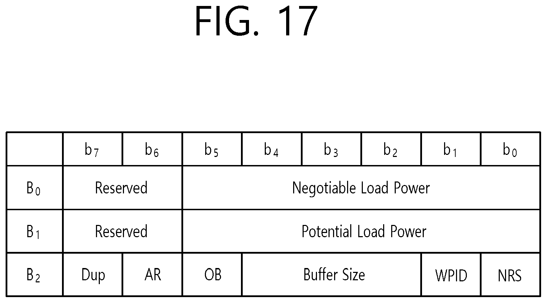

FIG. 17 is a diagram illustrating a message field of a capability packet (CAP) of a wireless power transmitter according to an embodiment.

A capability packet (CAP) according to an embodiment may have a header value of 0x31, and referring to FIG. 17, may include a message field of 3 bytes.

Referring to FIG. 17, a 1-bit authentication (AR) flag and a 1-bit out-of-band (OB) flag may be included in the message field of the capability packet (CAP).

The authentication flag AR indicates whether the wireless power transmitter 1010 supports the authentication function. For example, if the value of the authentication flag AR is '1', it indicates that the wireless power transmitter 1010 supports an authentication function or can operate as an authentication responder, if the value of the authentication flag AR is '0', it may indicate that the wireless power transmitter 1010 does not support the authentication function or cannot operate as an authentication responder.

The out-band (OB) flag indicates whether the wireless power transmitter 1010 supports out-band communication. For example, if the value of the out-band (OB) flag is '1', the wireless power transmitter 1010 instructs out-band communication, if the value of the out-band (OB) flag is '0', it may indicate that the wireless power transmitter 1010 does not support out-band communication.

In the negotiation phase, the wireless power receiver 1020 receives a capability packet (CAP) of the wireless power transmitter 1010, it is possible to check whether the wireless power transmitter 1010 supports an authentication function, supports out-of-band communication, and the like.

And, according to FIG. 16, in the negotiation phase or re-negotiation phase, the wireless power receiver 1020 may use at least one specific request packet (SRQ, Specific Request data packet) to update the elements of the Power Transfer Contract related to the power to be provided in the power transfer phase, the negotiation phase or the re-negotiation phase may be ended (S1305).

The wireless power transmitter 1010 may transmit only ACK, only ACK or NAK, or only ACK or ND in response to the specific request packet SRQ according to the type of the specific request packet SRQ (S1306).

In the above-described ping phase, configuration phase, and negotiation/renegotiation phase, a data packet or message exchanged between the wireless power transmitter 1010 and the wireless power receiver 1020 may be transmitted/received through in-band communication.

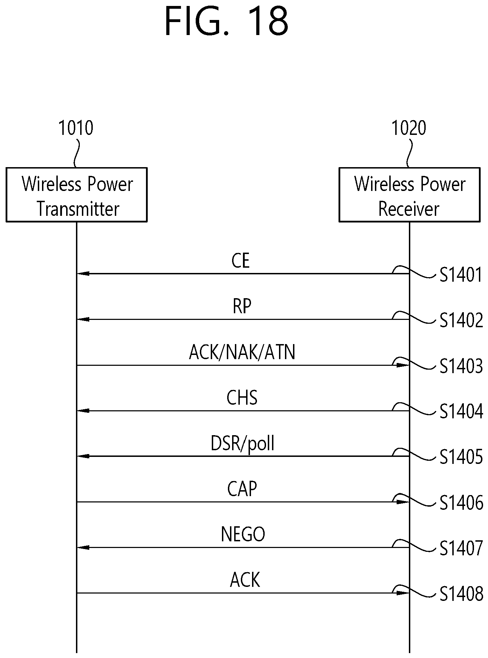

FIG. 18 is a flowchart schematically illustrating a protocol of a power transmission step according to an embodiment.

In the power transfer phase, the wireless power transmitter 1010 and the wireless power receiver 1020 may transmit/receive wireless power based on a power transfer contract.

Referring to FIG. 18, in the power transfer phase, the wireless power receiver 1020 transmits a control error data packet (CE) including information on the difference between the actual operating point and the target operating point to the wireless power transmitter 1010 (S 1401).

Also, in the power transfer phase, the wireless power receiver 1020 transmits a received power packet (RP, Received Power data packet) including information on the received power value of the wireless power received from the wireless power transmitter 1010 to the wireless power transmitter 1010 (S1402).

In the power transfer phase, the control error packet (CE) and the received power packet (RP) are data packets that are repeatedly transmitted/received according to timing constraints required for wireless power control.

The wireless power transmitter 1010 may control the level of wireless power transmitted based on the control error packet (CE) and the received power packet (RP) received from the wireless power receiver 1020.

The wireless power transmitter 1010 may respond with an 8-bit bit pattern such as ACK, NAK, ATN, etc. to the received power packet (RP) (S1403).

For a received power packet (RP/0) with a mode value of 0, when the wireless power transmitter 1010 responds with ACK, it means that power transmission can continue at the current level.

For a received power packet (RP/0) with a mode value of 0, when the wireless power transmitter 1010 responds with NAK, it means that the wireless power receiver 1020 should reduce power consumption.

For a received power packet (RP/1 or RP/2) having a mode value of 1 or 2, when the wireless power transmitter 1010 responds with ACK, it means that the wireless power receiver 1020 has accepted the power correction value included in the received power packet (RP/1 or RP/2).

For a received power packet (RP/1 or RP/2) having a mode value of 1 or 2, when the wireless power transmitter 1010 responds with NAK, it means that the wireless power receiver 1020 does not accept the power correction value included in the received power packet RP/1 or RP/2.

About Receive Power Packet (RP), when the wireless power transmitter 1010 responds with ATN, it means that the wireless power transmitter 1010 requests permission for communication.

The wireless power transmitter (1010) and the wireless power receiver (1020) can control the transmitted/received power level based on a control error packet (CE), a received power packet (RP), and a response to the received power packet (RP).

Also, in the power transfer phase, the wireless power receiver 1020 transmits a charge status data packet (CHS) including information on the charge state of the battery to the wireless power transmitter 1010 (S1404). The wireless power transmitter 1010 may control the power level of the wireless power based on the information on the state of charge of the battery included in the state of charge packet (CHS).

Meanwhile, in the power transfer phase, the wireless power transmitter 1010 and/or the wireless power receiver 1020 may enter a renegotiation phase to renew the power transfer contract.

In the power transfer phase, when the wireless power transmitter 1010 wants to enter the renegotiation phase, the wireless power transmitter 1010 responds to the received power packet (RP) with ATN. In this case, the wireless power receiver 1020 may transmit a DSR/poll packet to the wireless power transmitter 1010 to give the wireless power transmitter 1010 an opportunity to transmit a data packet (S1405).

When the wireless power transmitter 1010 transmits a performance packet (CAP) to the wireless power receiver 1020 in response to the DSR/poll packet (S1406), the wireless power receiver 1020 transmits a renegotiation packet (NEGO) requesting the progress of the renegotiation phase to the wireless power transmitter 1010 (S1407), when the wireless power transmitter 1010 responds with an ACK to the renegotiation packet (NEGO) (S1408), the wireless power transmitter 1010 and the wireless power receiver 1020 enter a re-negotiation phase.

In the power transfer phase, when the wireless power receiver 1020 wants to enter the re-negotiation phase, the wireless power receiver 1020 transmits a renegotiation packet (NEGO) requesting the progress of the re-negotiation phase to the wireless power transmitter 1010 (S1407), when the wireless power transmitter 1010 responds with an ACK to the renegotiation packet (NEGO) (S1408), the wireless power transmitter 1010 and the wireless power receiver 1020 enter a re-negotiation phase.

Meanwhile, the wireless power transmission system may have an application layer message exchange function to support expansion into various application fields. Based on this function, device authentication related information or other application level messages can be transmitted and received between the wireless power transmitter 1010 and the wireless power receiver 1020. In this way, in order to exchange upper layer messages between the wireless power transmitter 1010 and the wireless power receiver 1020, a separate hierarchical architecture for data transmission is required, and an efficient management and operation method for the hierarchical architecture is required.

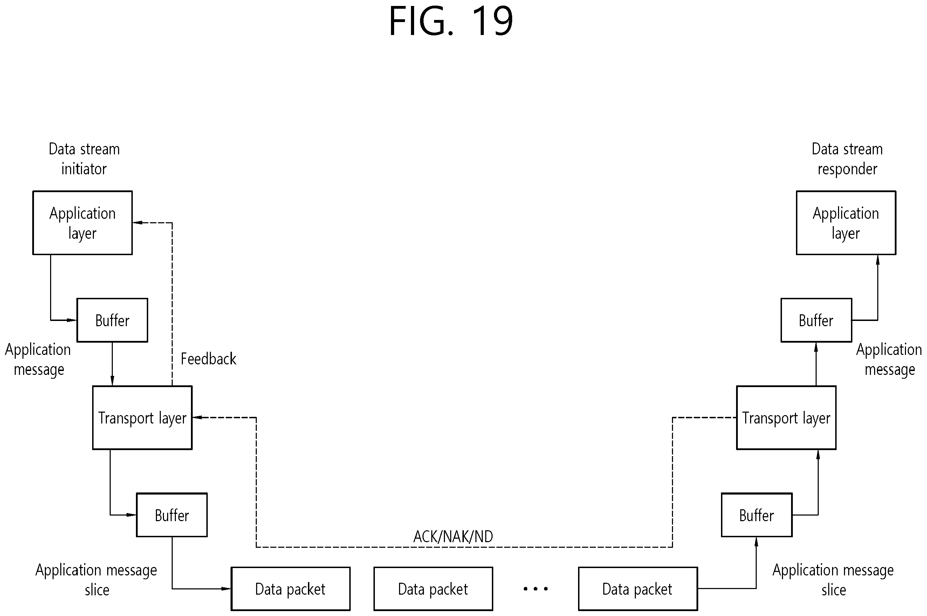

FIG. 19 illustrates a hierarchical architecture for transmitting/receiving an application level message between a wireless power transmitter and a wireless power receiver according to an example.

Referring to Figure 15, a data stream initiator and a data stream responder transmit/receive a data transport stream in which an application level message is divided into a plurality of data packets using an application layer and a transport layer.

Both the wireless power transmitter 1010 and the wireless power receiver 1020 can be data stream initiators or responders. For example, if the data stream initiator is the wireless power receiver 1020, the data stream responder is the wireless power transmitter 1010, when the data stream initiator is the wireless power transmitter 1010, the data stream responder is the wireless power receiver 1020.

The application layer of the data stream initiator creates an application level message (application message, for example, an authentication related message, etc.) and stores it in a buffer managed by the application layer. In addition, the application layer of the data stream initiator submits the application message stored in the buffer of the application layer to the transport layer. The transport layer of the data stream initiator stores the provided application message in a buffer managed by the transport layer. The size of the transport layer buffer may be at least 107 bytes, for example.

The transport layer of the data stream initiator transmits the application message to the data stream responder through a radio channel using the data transport stream. At this time, the application message is sliced into a plurality of data packets and transmitted, a plurality of data packets in which the application message is divided and continuously transmitted may be referred to as a data transport stream.

If an error occurs during the transmission of data packets, the data stream initiator may retransmit the packet in which the error occurred, at this time, the transport layer of the data stream initiator may provide feedback on the success or failure of message transmission to the application layer.

A data stream responder receives a data transport stream over a radio channel. The received data transport stream is demodulated and decoded in the reverse process of the procedure in which the data stream initiator transmits the application message to the data transport stream. For example, the data stream responder stores the data transport stream in a buffer managed by the transport layer, it merges them and transfers them from the transport layer to the application layer, the application layer can store the received message in a buffer managed by the application layer.

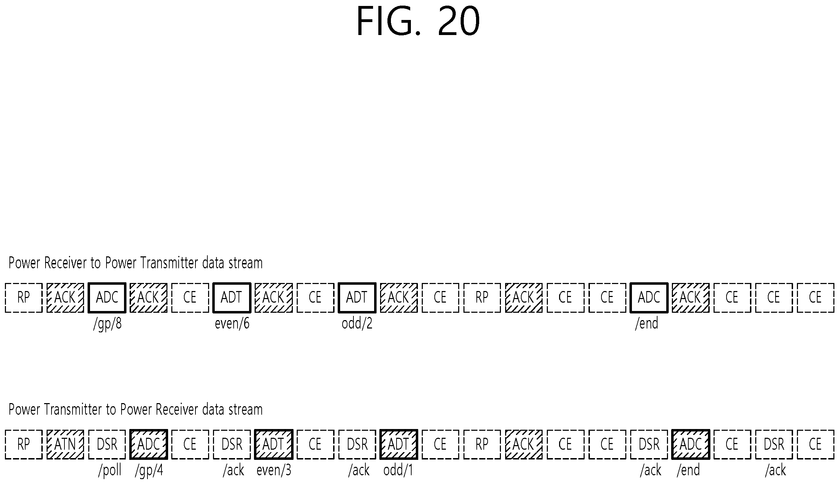

FIG. 20 illustrates a data transmission stream between a wireless power transmitter and a wireless power receiver according to an example.

Referring to FIG. 20, a data transport stream may include an auxiliary data control (ADC) data packet and a plurality of consecutive auxiliary data transport (ADT) data packets.

A data stream initiator may start (open) a data transport stream using an ADC data packet and terminate the data transport stream. That is, the data stream initiator transmits an ADC data packet (ADC/gp/8) to start the data transport stream or request the start of the data transport stream, it transmits a plurality of ADT data packets in which the application message is slid, it may end the data transport stream by transmitting an ADC data packet (ADC/end) or request termination of the data transport stream.

Also, the data stream initiator may reset the data transport stream using the ADC data packet.

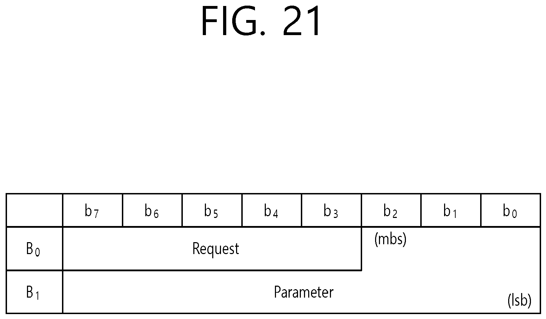

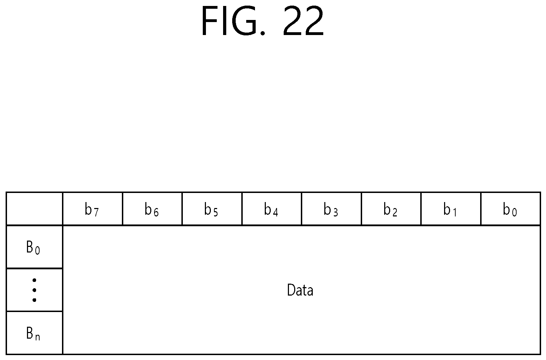

FIG. 21 is a diagram illustrating a format of a message field of an ADC data packet according to an embodiment, and FIG. 22 is a diagram illustrating a format of a message field of an ADT data packet according to an embodiment.

Referring to FIG. 21, the message field of the ADC data packet may consist of 2 bytes (the ADC data packet including the header is 3 bytes), it may include a byte (B0) including a request field and a byte (B 1) including a parameter field.

According to the value of the request field, ADC data packets can be distinguished as an ADC starting a data transport stream (or requesting the start of a data transport stream), an ADC that terminates the data transport stream (or requests termination of the data transport stream), and an ADC resetting the data transport stream (or requesting reset of the data transport stream). In addition, ADC data packets can be discriminated according to the value of the request field, which ADC starts a data transport stream for transmitting which application message.

For example, an ADC data packet in which the value of the request field is 0 is an ADC (ADC/end) that terminates the data transport stream or requests termination of the data transport stream, an ADC data packet with a value of 2 in the request field is an ADC (ADC/auth) requesting to start a data transport stream that transmits an authentication-related message or start a data transport stream that transmits an authentication-related message, and an ADC data packet having a request field value of 5 may be an ADC (ADC/rst) that resets the data transport stream or requests reset of the data transport stream. ADC data packets whose request field value is any one of 0x10 to Ox1F may be an ADC (ADC/ prop) that starts a data transport stream carrying data other than authentication (e.g. proprietary data) or requests the start of a data transport stream.

The ADC data packet may include information about the number of data bytes of the data transport stream. To this end, the parameter field of the ADC data packet starting the data transport stream may include information on the number of bytes of the data transport stream. A parameter field of an ADC terminating the data transport stream (ADC/end) and/or an ADC resetting the data transport stream (ADC/rst) may be set to 0.

Referring again to FIG. 20, as a data stream initiator, the wireless power transmitter may respond with one of ACK, NAK, ND, and ATN to an ADC data packet transmitted from the wireless power receiver to the wireless power transmitter. The wireless power transmitter responds with ACK when the request according to the received ADC data packet is successfully performed, it responds with NAK when the request according to the received ADC data packet cannot be performed, it responds with ND when the wireless power transmitter does not support the data transport stream requested by the received ADC data packet, when the wireless power transmitter requests permission of communication from the wireless power receiver, it may respond with ATN.

For ADC data packets transmitted by the wireless power transmitter as the initiator of the data stream to the wireless power receiver, the wireless power receiver may respond using a Data Stream Response (DSR) data packet having a 1-byte message field. For example, the wireless power receiver may respond with one of DSR/ack, DSR/nak, DSR/nd, and DSR/poll. The wireless power receiver responds with DSR/ack when the request according to the received ADC data packet is successfully performed, it responds with NAK when it fails to perform a request according to the received ADC data packet, it responds with ND when the wireless power receiver does not support the requested data transport stream or the request by the received ADC data packet, it may respond with DSR/poll when the wireless power transmitter does not receive the last data packet transmitted.

Referring to FIG. 22, the message field of the ADT data packet includes an N-byte data field. The message field of the ADT data packet may have a size of 1 to 7 bytes. The data field contains fragments of application messages transmitted over the data transport stream. That is, the application message transmitted through the data transport stream is sliced into a plurality of ADT data packets and transmitted/received.

Referring back to FIG. 20, the wireless power transmitter may respond with one of ACK, NAK, ND, and ATN to an ADT data packet transmitted from the wireless power receiver to the wireless power transmitter as a data stream initiator. The wireless power transmitter responds with ACK when it correctly processes the data in the received ADT data packet, it responds with NAK when it fails to process the data in the received ADT data packet, it responds with ND when there is no data transport stream being received by the wireless power transmitter, it may respond with ATN when the wireless power transmitter requests permission of communication from the wireless power receiver.

For ADT data packets transmitted by a wireless power transmitter as a data stream initiator to a wireless power receiver, the wireless power receiver may respond using a DSR data packet having a 1-byte message field. For example, the wireless power receiver may respond with one of DSR/ack, DSR/nak, DSR/nd, and DSR/poll. The wireless power receiver responds with DSR/ack when it correctly processes the data in the received ADT data packet, it responds with NAK when it fails to process the data in the received ADT data packet, it responds with ND when there is no data transport stream being received by the wireless power receiver, it may respond with DSR/poll when the wireless power transmitter does not receive the last data packet transmitted.

The aforementioned data transport stream may be transmitted/received in the power transfer phase.

However, in the power transfer phase, since the wireless power receiver 1020 repeatedly transmits the control error packet (CE) and the received power packet (RP) according to each required timing constraint, transmission or reception of ADC data packets and/or ADT packets of the data transport stream is performed within the interval of control error packets (CE) and the interval of received power packets (RP).

Meanwhile, in the power transfer phase, the wireless power transmitter 1010 and the wireless power receiver 1020 may communicate only with in-band communication, communicate with each other using in-band communication and out-band communication, or communicate only with out-band communication.

The wireless power receiver 1020 may determine a communication mode to be used in a power transfer phase in a negotiation phase or a re-negotiation phase.

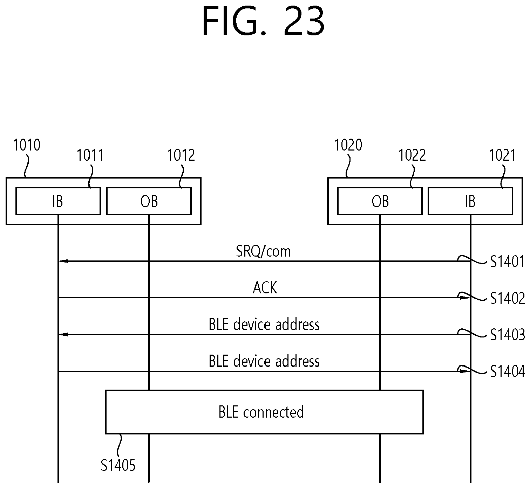

FIG. 23 is a flowchart schematically illustrating a protocol for determining a communication mode to be used in a negotiation step or a renegotiation step according to an embodiment.

Referring to FIG. 23, a wireless power transmitter 1010 may include an in-band communication module 1011 and an out-band communication module 1012. The in-band communication module 1011 may perform message modulation, message transmission, message demodulation, etc. through in-band communication, the out-band communication module 1012 may perform message modulation, message transmission, and message demodulation through out-band communication. The in-band communication module 1011 and the out-band communication module 1012 may be physically separated from each other, but may be physically implemented by one processor.

The wireless power receiver 1020 may also include an in-band communication module 1021 and an out-band communication module 1022. The in-band communication module 1021 may perform message modulation, message transmission, message demodulation, etc. through in-band communication, the out-of-band communication module 1022 may perform message modulation, message transmission, and message demodulation through out-of-band communication. The in-band communication module 1021 and the out-band communication module 1022 may be physically separated from each other, but may be physically implemented by one processor.

Hereinafter, for convenience of explanation, it is assumed that both the wireless power transmitter 1010 and the wireless power receiver 1020 support out-of-band communication and use BLE communication as out-of-band communication.

In the negotiation phase or re-negotiation phase, the wireless power receiver 1020 may transmit a specific request packet (SRQ/com) including information on a communication mode to be used in the power transfer phase to the wireless power transmitter 1010 (S1501).

The specific request packet (SRQ/com) transmitted in S1401 may be a type of specific request packet (SRQ) transmitted in S1305 of the negotiation phase or re-negotiation phase described with reference to FIG. 16.

**Hereinafter, this specification will be described in more detail.**

Bluetooth standard technology is divided into core specifications of BR/EDR (Basic Rate/Enhanced Data Rate) and LE (Low Energy). Of these, BR/EDR is a wireless communication technology that occupies a dominant position in the short-distance WPAN technology and is applied to many products.

Bluetooth Low Energy (BLE) is designed to achieve higher energy efficiency compared to the existing Bluetooth BR/EDR.

Meanwhile, wireless charging methods include a magnetic induction method using a magnetic induction phenomenon between a primary coil and a secondary coil, and a magnetic resonance method in which magnetic resonance is performed using a frequency in a band of several tens of kHz to several MHz to transmit power. Here, the wireless charging standard for the magnetic resonance method is led by a conference called A4WP, and the magnetic induction method is led by the WPC (Wireless Power Consortium).

In the WPC, various status information and commands related to the wireless charging system are designed to be exchanged in-band. However, in the case of in-band communication, information exchange is relatively slow because it is not a system designed specifically for communication. Accordingly, in-band communication may not be appropriate for fast information exchange and exchange of various information.

Under the above background, a method in which information related to a wireless charging system is exchanged by combining out-of-band communication (in other words, out-band communication) with a wireless charging system (e.g., in-band communication) has been attempted. As representative out-of-band technologies, NFC and BLE technologies may correspond to candidate technologies.

On the other hand, in order to perform wireless charging between devices, mutual information is exchanged before charging starts, and information for identifying each other's status can be continuously exchanged even during charging.

That is, the wireless power transmitter (PTx) may acquire information on received power from the wireless power receiver (PRx) based on OOB (e.g. BLE) communication (For convenience of description, it has been described that information on received power is obtained through out-of-band communication, but in this specification, an example in which information on received power is obtained through in-band communication is also provided). The wireless power transmitter calculates transmission power using the obtained information.

In the above situation, if the third device intervenes and sends erroneous data to the wireless power transmitter or wireless power receiver, a normal wireless power transmission operation cannot be performed between the wireless power transmitter and the wireless power receiver.

As an example in which a normal wireless power transmission operation cannot be performed, for example, there may be examples where the third device hacks the communication between the wireless power transmitter and the wireless power receiver, thereafter, the third device transmits information requesting the wireless power transmitter to transmit power that the wireless power receiver cannot handle to the wireless power receiver. In this exemplary situation, the wireless power transmitter transmits power that the wireless power receiver cannot handle, the wireless power receiver may receive power that the wireless power receiver itself cannot handle, causing a malfunction of the wireless power receiver (or wireless power transmitter).

That is, as described above, when the wireless power transmitter receives fake data, the wireless power transmitter performs power transmission with an incorrect value, this causes a risk of damage to devices (wireless power transmitter and/or wireless power receiver).

Therefore, in a situation where wireless power-related data (e.g., Qi data) is exchanged, a technique for guaranteeing integrity of data exchanged between PTx and PRx is required. In other words, in wireless power charging, the importance of security for data transmitted between a wireless power transmitter and a wireless power receiver is emerging. Accordingly, hereinafter, a technique for ensuring data integrity between a wireless power transmitter and a wireless power receiver will be provided.

The following drawings are made to explain a specific example of the present specification. Since the names of specific devices or names of specific signals/messages/fields described in the drawings are provided as examples, the technical features of the present specification are not limited to the specific names used in the drawings below.

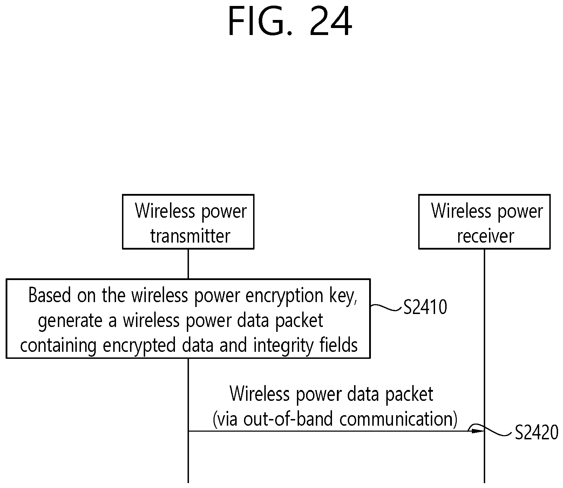

FIG. 24 is a flowchart of a method of transmitting a wireless power data packet according to an embodiment of the present specification.

According to FIG. 24, the wireless power transmitter may generate a wireless power data packet including encrypted data and integrity information based on the wireless power encryption key (S2410).

As an example, as described above, the wireless power transmission device may be a device that includes a power converter for transmitting wireless power to a wireless power receiver by magnetic coupling at an operating frequency and a controller communicating with the wireless power receiver and controlling transmission of the wireless power using at least one of in-band communication using the operating frequency and out-band communication using a frequency other than the operating frequency. Here, since the specific examples for this are the same as those described above (and/or will be described later), descriptions of overlapping contents will be omitted in order to omit unnecessary repetition.

For example, as described above, the wireless power receiver may be a device that includes a power pickup unit that receives wireless power from a wireless power transmission device by magnetic coupling at an operating frequency, and a controller communicating with the wireless power transmitter and controlling reception of the wireless power using at least one of in-band communication using the operating frequency and out-band communication using a frequency other than the operating frequency. Here, since the specific examples for this are the same as those described above (and/or will be described later), descriptions of overlapping contents will be omitted in order to omit unnecessary repetition.

Meanwhile, the encrypted data may be data encrypted in a device (e.g., a wireless power transmitter in this example) that transmits the above data including time information and wireless power parameters. To be more specific, the encrypted data herein may refer to data encrypted through AES-CCM in terms of message type, message ID time, and Qi parameters based on, for example, a Qi encryption key and/or a Qi encryption nonce. Here, for convenience of description, time information, that is, a kind of OTP may be used interchangeably with message ID time. Here, since the specific examples for this are the same as those described above (and/or will be described later), descriptions of overlapping contents will be omitted in order to omit unnecessary repetition.

As an example, the integrity information may be information used to verify the validity of the wireless power data packet, and the time information may be information indicating a time interval in which the wireless power data packet is valid. Here, since the specific examples for this are the same as those described above (and/or will be described later), descriptions of overlapping contents will be omitted in order to omit unnecessary repetition.

The wireless power transmitter may transmit a wireless power data packet to the wireless power receiver (S2420).

For example, the wireless power transmitter may establish in-band communication using a power signal of wireless power and out-band communication using Bluetooth-based communication, and transmit the wireless power data packet based on the out-band communication. Here, for example, the out-of-band communication may be bluetooth low energy (BLE) communication. Here, since the specific examples for this are the same as those described above (and/or will be described later), descriptions of overlapping contents will be omitted in order to omit unnecessary repetition.

For example, the wireless power encryption key may be transmitted based on the in-band communication. Here, since the specific examples for this are the same as those described above (and/or will be described later), descriptions of overlapping contents will be omitted in order to omit unnecessary repetition.

For example, the time information may be set based on charging capacity information exchanged between the wireless power transmitter and the wireless power receiver. Here, for example, the charge capacity information may be exchanged through the in-band communication. Also, for example, when the charging capacity indicated by the charging capacity information is large and the transmission power is high, the effective time interval may be set short. Here, since the specific examples for this are the same as those described above (and/or will be described later), descriptions of overlapping contents will be omitted in order to omit unnecessary repetition.

For example, the time information and/or the wireless power encryption key may be linked to the wireless power transmitter or user account. Here, since the specific examples for this are the same as those described above (and/or will be described later), descriptions of overlapping contents will be omitted in order to omit unnecessary repetition.

For example, the wireless power data packet may be generated based on a wireless power encryption nonce and the wireless power encryption key. Here, since the specific examples for this are the same as those described above (and/or will be described later), descriptions of overlapping contents will be omitted in order to omit unnecessary repetition.

Meanwhile, in the above-described examples, the wireless power transmitter performs encryption and generates integrity information. However, in this specification, only the wireless power transmitter does not necessarily perform encryption and generates integrity information.

That is, the present specification may also provide an example in which the wireless power receiver performs encryption and generates integrity information. Although not separately described through drawings, for example, a method of transmitting a wireless power data packet performed by a wireless power receiver may be provided in the present specification. At this time, according to this method, the wireless power receiver generates the wireless power data packet including encrypted data and integrity information based on a wireless power encryption key, the encrypted data is data in which time information and wireless power parameters are encrypted, and it transmits the wireless power data packet to the wireless power transmitter, the integrity information is information used to verify the validity of the wireless power data packet, and the time information may be information indicating a time interval in which the wireless power data packet is valid. Specific examples of this are as described above or described later, so repeated descriptions will be omitted.

Hereinafter, the embodiments of the present specification described above will be described item by item.

**1. MAC (Message Authentication Code) and timestamp period packet validity filtering for Qi data**

According to the prior art, in a process of authenticating messages exchanged between a wireless power transmitter and a wireless power receiver, a field for checking integrity of data and a method of using the corresponding field have not been defined. Accordingly, in the present specification, it is intended to provide a feature for filtering the validity of a wireless power data packet based on integrity information and time information through drawings.

Here, the integrity information may be mixed with MAC or MIC (Message Integrity Check) for convenience of description, time information may be mixed with a time stamp period packet and/or a one time password (OTP) and/or a time packet for convenience of description.

The wireless power receiver (or wireless power transmitter) may check the integrity field of the data packet it has received. Here, as a result of checking the integrity field, if the integrity field indicates that the data packet is valid, the wireless power receiver (or wireless power transmitter) determines that no modulation is applied to the data packet, thereafter, wireless power transmission/communication may be performed between the wireless power receiver and the wireless power transmitter using the above data packet.

Contrary to the above, if the integrity field indicates that the data packet is invalid as a result of checking the integrity field by the wireless power receiver (or wireless power transmitter), the wireless power receiver (or wireless power transmitter) may determine that modulation has been applied to the data packet and may discard, drop, or ignore the data packet.

Meanwhile, although the integrity field indicates that the data packet is valid, hacking by a third device may succeed. In order to provide additional security for this, the present specification intends to provide not only the integrity field but also time information. Here, the time information, as described above, may correspond to information indicating a time interval in which the wireless power data packet is valid, and may correspond to a kind of OTP, time stamp, or time field.

An example of using the above time information may be as follows. If the integrity field indicates that the data packet is valid, the wireless power receiver (or wireless power transmitter) may check the time field in preparation for a relay attack (e.g., hacking by a third device). Thereafter, the wireless power receiver (or wireless power transmitter) may transmit/receive wireless power based on the data packet only during the valid period indicated by the time field.

If the integrity field indicates that the data packet is valid, but the validity period has passed as a result of checking the time field, the wireless power receiver (or wireless power transmitter) may ignore the data packet. Here, the above time field (or time information) may be linked to a specific device and user account. That is, even if the wireless power receiver (or wireless power transmitter) is not modulated, it can check the time field in preparation for a relay attack and process only valid packets in conjunction with a specific device and user account.

For a smooth understanding of the present specification, the above contents may be described as follows through drawings.

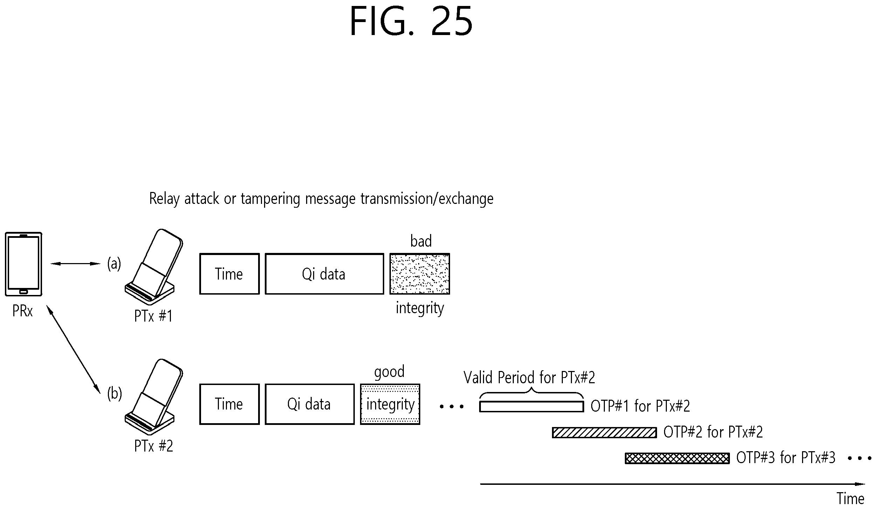

FIG. 25 schematically illustrates an example of filtering validity of a wireless power data packet based on integrity information and time information.

(a) of FIG. 25 schematically illustrates an example in which a relay attack or modulated message is exchanged between a wireless power transmitter #1 (PTx#l) and a wireless power receiver (PRx). (b) of FIG. 25 schematically illustrates an example in which a message including an integrity field indicating validity of a data packet is exchanged between wireless power transmitter #2 (PTx#2) and wireless power receiver (PRx).

According to (a) of FIG. 25, the wireless power receiver PRx may receive a wireless power data packet from PTx#1. Here, the wireless power data packet may include time information, wireless power data, and integrity information, and the integrity information at this time may indicate that the wireless power data packet is invalid. Here, for example, when the integrity information is 'bad', the integrity information may indicate that the wireless power data packet is invalid.

If the integrity information is 'bad', as described above, the wireless power receiver may discard, drop, or ignore the data packet, in this case, the wireless power receiver may not check the time information described above (However, this specification does not intend to exclude examples of checking time information even when integrity information is 'bad'. That is, depending on implementation, time information may be checked even when integrity information is 'bad').

According to (b) of FIG. 25, the wireless power receiver PRx may receive a wireless power data packet from PTx#2. Here, the wireless power data packet may include time information, wireless power data, and integrity information, and the integrity information at this time may indicate that the wireless power data packet is valid. Here, for example, when the integrity information is 'good', the integrity information may indicate that the wireless power data packet is valid.

When the wireless power data packet is valid, the wireless power receiver may check time information, that is, a time field. As described above, the time field may indicate a time interval in which the wireless power data packet is valid, for example, in the example of FIG. 25 (b), the time information may indicate valid time intervals in the form of OTP#1 for PTx#2, OTP#2 for PTx#2, OTP#3 for PTx#2, and the like.

For understanding of the specification, the example of FIG. 25 may be additionally described as follows.

For example, in a packet exchanged with PTx#2, an integrity field may be configured based on a key exchanged through negotiation and a prior process. In addition, the wireless power receiver may check whether the above integrity field is valid and process it. However, since the integrity field of the packet sent by PTx#1 is not valid, the wireless power receiver discards the packet received from PTx#1.

If PTx#1 interferes with communication between PRx and PTx#2 by constructing a packet with a valid integrity field by duplicating the packet of PTx#2 based on the relay packet, etc., the wireless power receiving device checks the time field and allows an attack only for a certain period of time. Even if the integrity field is valid, the wireless power receiver may ignore packets whose validity period according to the time field has passed.

On the other hand, when the value of the Qi data information received in the valid period indicated by the time information changes greatly (i.e., when the change in the received value is equal to or greater than a certain level), an anomaly detection function may be implemented. Here, the value for the certain level may be preset in the device or may be a value exchanged/transmitted through in-band communication and/or out-band communication.

For example, if there are 5 received power values obtained within the valid interval and the 5 values are 5W, 5W, 6W, 100W, and 5W, an anomaly can be detected and an operation can be performed according to 5W. In other words, the information about the 100W value can be ignored even if the integrity part is valid.

In other words, in combination with the previously described embodiment, even if the packet was received within the validity period and passed the integrity check, when the value included in the packet has a large deviation compared to the recently received values, the wireless power transmission / reception device, the wireless power transmission/reception device may determine this as an attack and ignore this packet. That is, when the value included in the packet has a greater deviation than recently received values, the apparatus for transmitting/receiving wireless power determines that the value is an abnormal value and ignores the packet.

As an example, the wireless power transmitter receives a wireless power related packet indicating that the integrity information is true within a valid time, if the packet at this time includes a request value that is equal to or greater than (or exceeds) a specific value (i.e., a request value with a large deviation) than the recently received requested power value, a wireless power transmitter may ignore the above value.

Additionally, as described above, time information indicating an effective period may be set based on charging capacity information exchanged between the wireless power transmitter and the wireless power receiver, this is explained through drawings as follows.

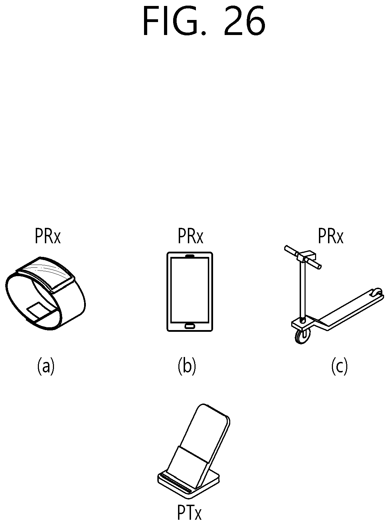

FIG. 26 schematically illustrates an example in which different valid intervals are set according to charging capacity information.

According to FIG. 26, a time field indicating an effective period may be set based on charge capacity information exchanged between PTx and PRx through the Qi protocol. That is, the valid period may be configured based on charging capacity information exchanged through the Qi protocol, that is, in-band communication. Here, information on the valid period may be exchanged between the wireless power transmitter and the wireless power receiver in a negotiation step or other procedures.

For example, in the case of a device having a large charging capacity and high transmission power, the security level may be raised by setting a short effective time.

For example, there is a smart watch corresponding to (a) of FIG. 26, a smart phone corresponding to (b) of FIG. 26, and an electric kickboard corresponding to (c) of FIG. 26, here, it can be assumed that the smart watch has the smallest charging capacity, the smart phone has the medium charging capacity, and the electric kickboard has the largest charging capacity.

In this case, the smart watch may have the longest valid period, the smart phone may have a medium effective period, and the electric kickboard may have the shortest valid period.

Meanwhile, the valid time value setting may be applied differently according to security strength and packet processing time required for each type of wireless power transmission packet.

In this case, examples of packets that can be applied here may be summarized in Table 4 below, for example, from the viewpoint of a power transfer phase.

[ Table 4]

| Mnemonic |
| --- |
| CE |
| EPT |
| ACK, NACK, ND, ATN |
| RP |
| DSR |
| ADC, ADT |
| CAP |
| PROP, CHS, ID, NULL, NEGO |

As described above, the effective time value setting may be applied differently depending on the security strength and packet processing time required for each type of wireless power transmission packet, valid time is longer than packet processing time, depending on the packet type, the higher the required security strength, the shorter it should be set. In other words, depending on the type of packet, the required security strength may be set to a lower level. Meanwhile, the key for creating the integrity field of each packet may follow the BT standard as it is, alternatively, an additional security stack can be added as suggested below.

In addition, an operation for creating some integrity fields using in-band may be performed. For example, a key or a value for generating a key may be exchanged through in-band communication.

Hereinafter, an example of a method of configuring an integrity field will be described through drawings.

**2. An example of how to construct an integrity field**

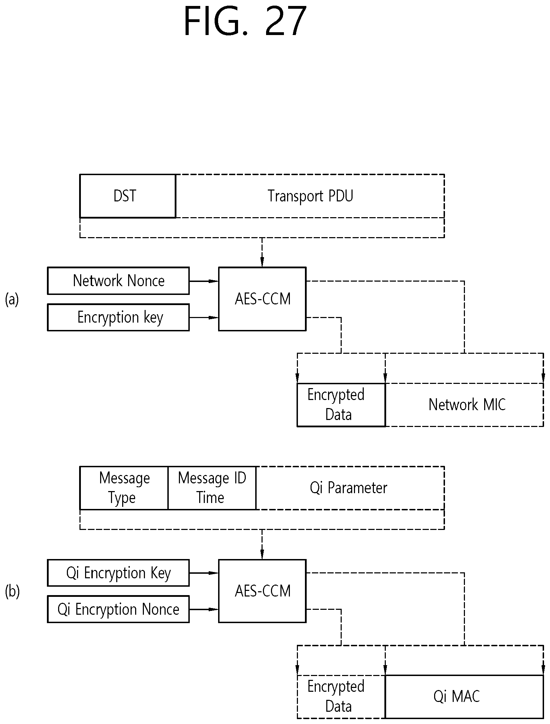

FIG. 27 schematically illustrates an example of a method of configuring an integrity field based on a CCM function.

(a) of FIG. 27 corresponds to an example of a method of configuring an integrity field according to the Bluetooth specification, (b) of FIG. 27 corresponds to an example of a method of configuring an integrity field to which a security stack is added.

Here, the CCM function may be as follows. RFC3610 defines an AES counter as CBC-MAC (CCM), and in this specification, AES-CCM can be defined as a function in which two outputs are generated from four inputs.

The input for AES-CCM is:

- 'k' is a 128-bit key
- 'n' is a 128-bit nonce
- 'm' is variable length data to be encrypted and authenticated - " plaintext"
- 'a' is variable length data to be authenticated - "Additional Data"

'ciphertext' and 'mic' are created as follows.

**[Equation 1]**

$$\text{ciphertext, mic} = \text{AES-CCM}(k, n, m, a)$$

Here, ciphertext may be variable length data after encryption, mic is a message integrity check value of m and a, and may also be named "MAC (Message Authentication Code)".

Meanwhile, when only k, n, and m parameters are provided to AES-CCM, the length of additional data may be zero.

According to (a) of FIG. 27, DST (Destination) and transport PDUs can be encrypted through AES-CCM based on a network nonce and an encryption key. Here, as a result of the encryption, encrypted data and network Message Integrity Check (MIC) may be generated. Here, the field for MIC may correspond to the integrity field provided in this specification.

In other words, the destination address and 'TransportPDU' can be encrypted and authenticated using AES-CCM. This may be the same way that Bluetooth low energy encryption and authentication works. Here, (a) of FIG. 27 may correspond to encryption in the network layer, for example.

Here, all network PDUs may be encrypted using an encryption key derived from the network key, and a more specific example of this will be described later.

Hereinafter, the above encryption process will be described through an equation as follows.

**[Equation 2]**

$$\text{EncDST} \parallel \text{EncTransportPDU, NetMIC} = \text{AES-CCM}(\text{EncryptionKey, Network Nonce,}$$

$$\text{DST} \parallel \text{TransportPDU})$$

According to (b) of FIG. 27, message type, message ID time, Qi parameter (in other words, wireless power parameter) can be encrypted via AES-CCM based on a Qi encryption key (in other words, a wireless power encryption key) and a Qi encryption nonce (in other words, a wireless power encryption nonce). Here, as a result of the encryption, encrypted data and a Qi MAC (Message Authentication Code) may be generated. Here, the field for Qi MAC may correspond to the integrity field provided in this specification.

In other words, based on the wireless power encryption key and the wireless power encryption nonce, the wireless power data packet including encrypted data and an integrity field may be generated, the encrypted data may be data in which time information and wireless power parameters are encrypted.

Hereinafter, the above encryption process will be described through an equation as follows.

**[Equation 3]**

Encrypted data, MAC = AES-CCM (Encryption key, Nonce, Parameter, Additional data),

Here, "Additional data" (Header ‖ Message Type) and "Parameter" to be encrypted (Size & PDU)

Here, the above encryption may be encrypted using an encryption key derived from the Qi link key, and a more specific example thereof will be described later.

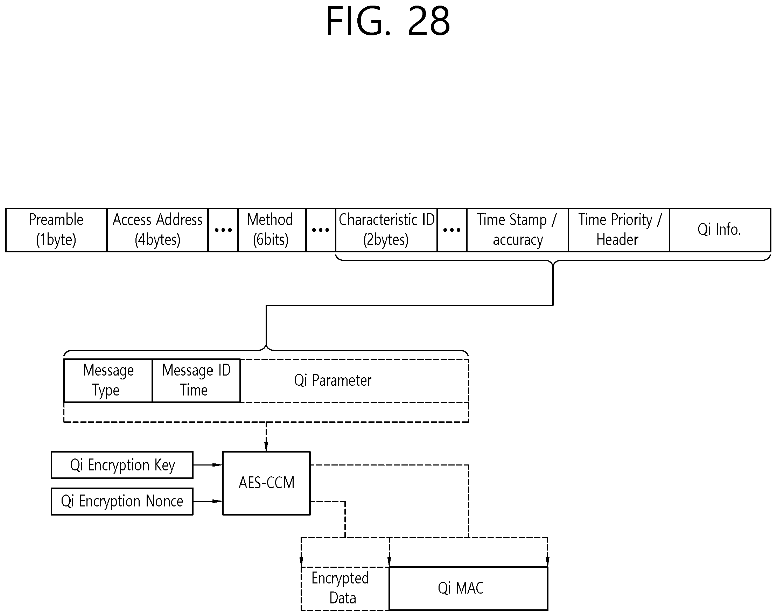

FIG. 28 illustrates the example of FIG. 27(b) in more detail.

According to FIG. 28, message type, message ID time, and Qi parameter may be configured based on 'Characteristic ID', 'Time Stamp/accuracy', 'Time Priority/Header', and 'Qi Info.'

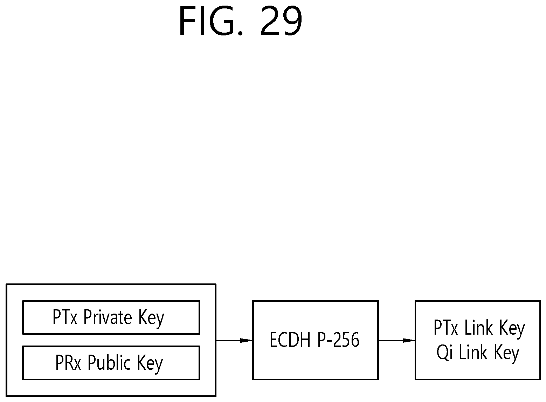

FIG. 29 schematically illustrates an example of a link key generation method.

According to FIG. 29, a PTx link key and a Qi link key may be generated based on Elliptic-curve Diffie-Hellman (ECDH) P-256 from a PTx private key and a PRx public key.

Here, comparing the hierarchy of the Qi link key with the Bluetooth-based network key hierarchy can be described as follows.

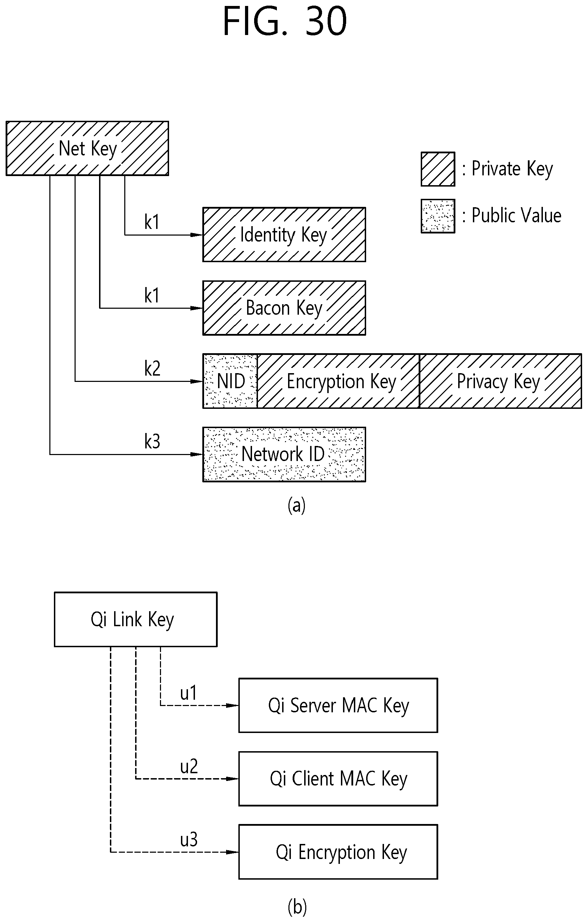

FIG. 30 schematically illustrates an example of a Bluetooth-based network key hierarchy and a Qi link key hierarchy.

(a) of FIG. 30 corresponds to a description of an example of a Bluetooth-based network key hierarchy. Here, the identity key and the beacon key may be derived from the network key based on the first function k1. A network identifier (NID), an encryption key, and a privacy key may be derived from the network key based on the second function k2. The network ID can be derived from the network key based on the third function (k3).

ere, the identity key, beacon key, encryption key, and privacy key correspond to private keys, and the network ID may be a public key.

(b) of FIG. 30 corresponds to an example of a hierarchy of Qi link keys. Here, the Qi server MAC key may be derived from the Qi link key based on the first function u1. The Qi client MAC key can be derived from the Qi link key based on the second function (u2). The Qi encryption key can be derived from the Qi link key based on the third function u3.

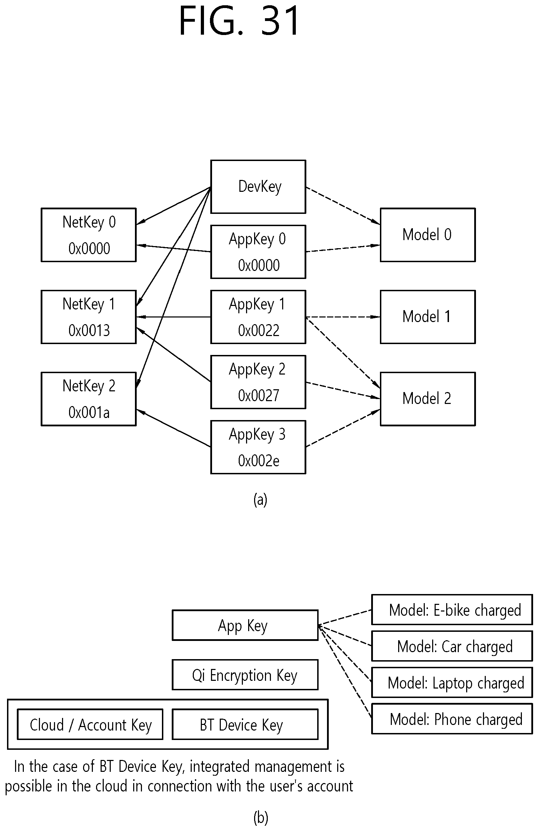

FIG. 31 schematically illustrates an example of key binding.

(a) of FIG. 31 schematically illustrates an example of application key binding based on Bluetooth.

As in the example in (a) of FIG. 31, the mesh profile specification defines two types of keys: an application key (AppKey) and a network key (NetKey). AppKeys are used to secure communications at the upper transport layer and NetKeys can be used to secure communications at the network layer. Both types of keys can be shared between nodes.

Additionally, the Device Key (DevKey) is a special application key that is unique to each node and is known only to the node and the configuration client and can be used to secure communication between the node and the configuration client.

An application key can be bound to a network key. That is, the application key can only be used in the context of the bound network key. An application key should only be bound to a single network key. A device key can be implicitly bound to any network key.

(b) of FIG. 31 schematically illustrates an example in which a Bluetooth device key and a cloud/account key are linked. According to (b) of FIG. 31, the application key may be related to an E-bike estimation model, a car charging model, a laptop charging model, or a mobile phone charging model. Here, in the case of the Bluetooth device key (BT Device Key), integrated management in the cloud may be possible in association with the user's account.

In summary, the process of generating each key or data described above can be expressed as an equation as follows.

**[Equation 4]**

Link Key = AES-CMAC (Header, ECDH P-256(PTx Private Key, PRx Public Key);

Encryption Key = AES-CMAC (Link Key, Message ID ‖ PTx Nonce ‖ PRx Nonce);

Encrypted Data, MAC = AES-CCM (Encryption Key, PRx Nonce, Parameter, Additional Data);

Qi Link Key = AES-CMAC (Header, ECDH P-256(PTx Private Key, PRx Public Key));

Qi Link Key = AES-CMAC (Header, ECDH P-256(PTx Public Key, PRx Private Key))

So far, an example of how to configure a key between a wireless power transmitter and a wireless power receiver and how to configure integrity using the above key has been described.

Meanwhile, in the following, in addition to the above viewpoint (or separately from the above viewpoint), how to share a key between a wireless power transmitter and a wireless power receiver will be described.

**3. Public Device Key Management**

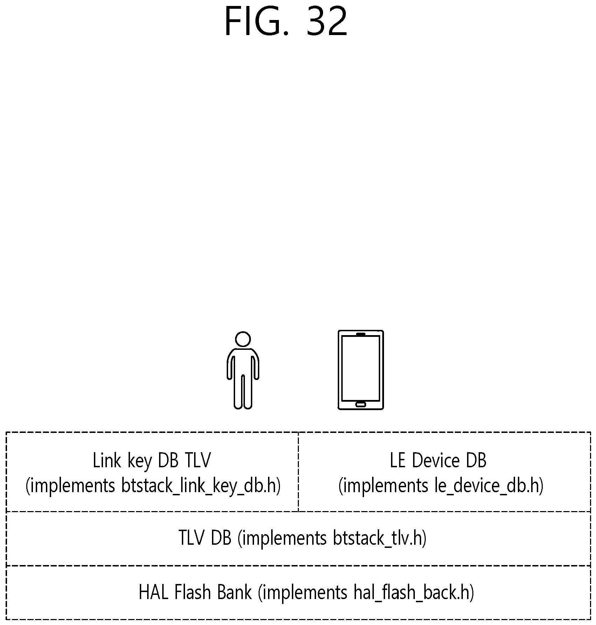

FIG. 32 conceptually illustrates an example of key sharing in Bluetooth communication.

According to FIG. 32, in order for two Bluetooth devices to communicate securely with each other, pairing is required to authenticate and encrypt communication between two devices by inputting a personal identification number (PIN) or by comparing numbers displayed on two devices. Here, if the generated secret data is stored, this process may be referred to as bonding.

In the case of Bluetooth Classic, a shared link key (between devices) is generated. Even in the case of BLE, a long term key (between devices) similar to the link key described above is generated, additionally, additional device information such as an identify resolving key (IRK) and public BD_ADDR (Bluetooth Device Address) may also be exchanged (between devices). And, through this information, if a verifiable private Bluetooth address is used, the device can recognize the previously connected device and reconnect the previously connected device.

That is, keys (and/or additional device information) may be shared between devices with which a Bluetooth connection is established (or to be established), shared keys (and/or additional device information) can be stored long-term between devices. In this situation, if one device reestablishes a Bluetooth connection with another device that has previously connected, based on the stored key (and/or additional device information), the device can efficiently re-establish a Bluetooth connection with another device that has previously connected.

Storing the shared key in the device as above may be advantageous in terms of efficiency of Bluetooth connection. However, there are cases in which it is inappropriate to store the key in a device for a long time as described above, and as a representative example, there is a case in which a device for storing a key is a common device that shares keys with a number of other devices.

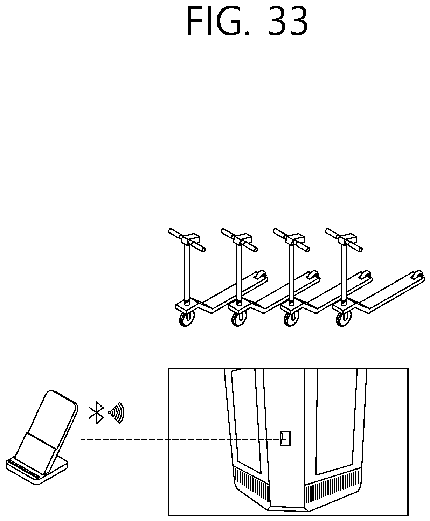

FIG. 33 schematically illustrates an example of a common device.

According to FIG. 33, as an example of a common device, there may be a common wireless charger, a shared kickboard, a shared bicycle, or a shared car provided in a subway station or building.

As described above, the wireless power transmitter (PTx) may share a key for security with a plurality of wireless power receivers (PRx). In particular, as in the example of FIG. 33, when PTx is installed in a public place, it may be necessary to communicate with tens to thousands of PRx devices, tens to thousands of keys may also be required as many as the number of PRx.

Here, despite the fact that the common device is unlikely to be reconnected to the once connected device due to the nature of the common device, if the public device stores the key on the common device for a long period of time as described above, this leaves room for common devices to waste memory unnecessarily. That is, when the key is stored for a long time in a common wireless power transmission device, it is inefficient in terms of memory management or key operation of the PTx.

Accordingly, the present specification intends to provide a method and an apparatus for differentiating key operation in the case of a common device in a wireless power transfer system.

The following drawings are made to explain a specific example of the present specification. Since the names of specific devices or names of specific signals/messages/fields described in the drawings are provided as examples, the technical features of the present specification are not limited to the specific names used in the drawings below.

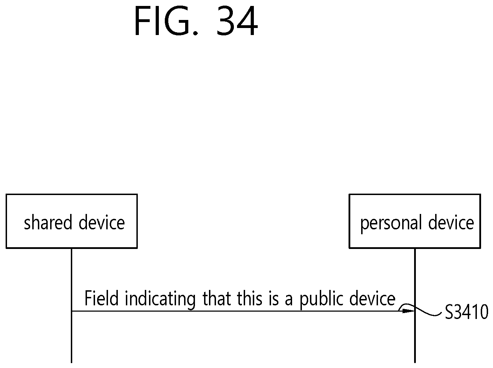

FIG. 34 is a flowchart of a public device key management method according to an embodiment of the present specification.

According to FIG. 34, a public device may transmit a field indicating that it is a public device to a personal device (S3410). Here, in this specification, it is named 'field' indicating that it is a common device, but it may be expressed as information indicating that it is a common device, a parameter indicating that it is a common device, and the like. In addition, the above public device may correspond to a wireless power transmission device, and the personal device may correspond to a wireless power receiving device (Of course, depending on the implementation, the public device may be a wireless power receiver and the personal device may be a wireless power transmitter).

In summary, in the case of a public device, the corresponding public device may transmit a field indicating that it is a public device to PRx.

After that, although not separately shown, the wireless power receiver can recognize that the PTx is a common PTx, and then the wireless power receiver can change the key holding time.

Here, changing the holding time of the key by the wireless power receiver may mean that the wireless power receiver keeps the holding time of the key relatively shorter than the holding period of the key for the personal device. In addition, changing the time for which the wireless power receiver maintains the key may mean that the key shared (or received, or transferred) from the public device is not maintained/stored.

The embodiment in FIG. 34 may be combined with the previously described embodiment (e.g., method of generating an integrity field and/or method of increasing security of data based on integrity field/time information) in terms of, for example, key sharing. Of course, the embodiment of FIG. 34 does not necessarily have to be combined with the previously described embodiment, and the embodiment of FIG. 34 may operate independently.

Meanwhile, the wireless power transmission device may operate in a non-bondable mode as a basic mode, where a device in the non-bondable mode does not allow bonding with a peer device. That is, the wireless power transmitter may operate a mode that does not allow the above-described bonding process as a basic mode.

In addition, the wireless power receiver may also operate in a non-bondable mode when checking a common device field (i.e., a field indicating that the wireless power transmitter is a common device) from the wireless power transmitter.

Between the common PTx and the PRx, the mode operating according to the common PTx may end immediately after the Qi operation ends. However, the present specification also provides a configuration in which the mode operating in accordance with the common PTx terminates the Qi operation and is maintained for a specific period in case the mode operating in accordance with the common PTx is immediately used again. Here, the specific period may be previously set in the common PTx or PRx device itself, or information on the specific period may be shared between the common PTx and PRx. Meanwhile, when the above specific period, that is, the maintenance period ends (Ex: 5 min), the mode operating in accordance with the common PTx may be discarded.

As in the example described above, in the case of a common wireless power transmitter, it may be desirable to operate in a non-bondable mode in terms of memory efficiency. On the other hand, when the public wireless power transmission device operates by the cloud / server, since the cloud/server can provide sufficient memory, even if information related to a large number of keys is stored, there may not be a big problem in terms of memory efficiency.

Accordingly, in this specification, an example of a case where a public PTx operates based on a cloud/server is also described through drawings.

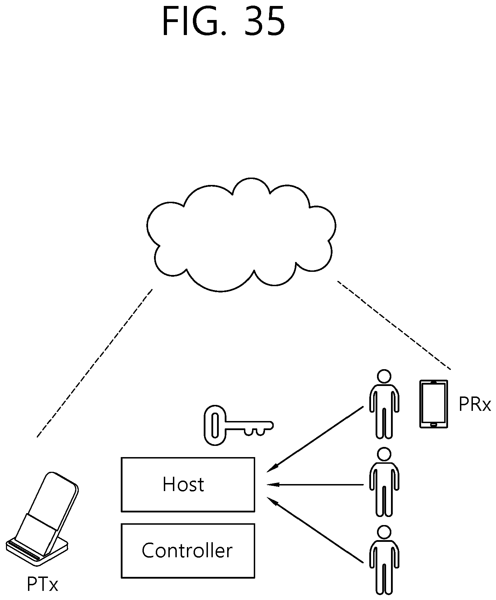

FIG. 35 is a schematic conceptualization of an example of a cloud-based operation.

According to FIG. 35, the public wireless power transmission device may perform an operation based on a cloud/server. For example, control of a wireless power transmission device existing in a subway may be operated based on a central server and/or a cloud. If the wireless power transmission device operates on a cloud/server basis, the present specification provides a feature of maintaining and reusing account-based bonding information, and a feature of performing wireless charging by a common wireless power transmitter and a wireless power receiver based on the maintained bonding information.

For example, the cloud/server may operate a first wireless power charging device located at a first subway station and a second wireless power charging device located at a second subway station. In this situation, when the user's wireless power receiving device establishes account-based bonding with the cloud/server through the first wireless power charging device located at the first subway station, the cloud/server may maintain bonding information. Then, when the wireless power receiving device of the user establishes a connection with the second wireless power charging device located in the second subway station, the cloud/server may reuse the maintained bonding information to establish a connection between the second wireless power charging device and the user's wireless power receiving device.

## 4. Value-added service dual roll and automatic setup conversion

In the case of a smartphone corresponding to a representative wireless charging receiving device, convenience may be hindered in terms of utilization using the smartphone due to placement on the wireless power transmission device for wireless charging.

For example, inputting certain characters through the display of a smartphone is not a problem in terms of convenience, even when a smart phone is placed in a wireless power transmitter, inputting text through a display of the smart phone may be impaired due to the wireless power transmitter.

Therefore, in the present specification, it is intended to provide a method for ensuring user convenience even when the wireless power receiver receives wireless power from the wireless power transmitter as described above, and a device using the same.

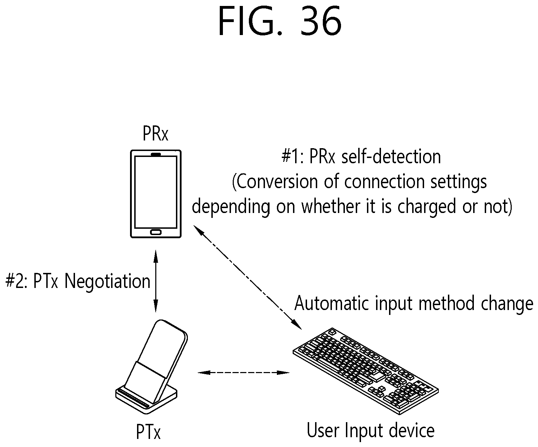

FIG. 36 schematically illustrates the concept of automatic settings conversion.

According to FIG. 36, a PRx may be a smartphone, a PTx may be a wireless power transmission device, and a keyboard may be provided as a user input device.

Through negotiation, PRx and PTx negotiate on how to operate the connection related to additional services of PRx (i.e., connection other than wireless charging, e.g., audio connection or input interface/keyboard device connection, etc.).

Through negotiation, the wireless power transmitter (Qi PTx) performs a master and PRx performs a slave operation. At this time, the PRx may manage resources in preparation for additional connections, and an example of resource management in preparation for additional connections may include performing a scan operation for additional connections.

If it is possible to connect a keyboard corresponding to a user input device while charging on the PTx, the PRx is connected to the keyboard according to the content negotiated through the condition setting and receives the input of the PRx through the keyboard. At this time, for the input service, PRx plays the role of master, and the keyboard plays the role of slave.

When the in-band connection between the PRx and PTx is disconnected for reasons such as charging completion, the PRx also disconnects the service connection with the keyboard device so that input can be received through the SW keyboard of the PRx device itself.

The automatic setting conversion provided in this specification may be applied in various services, and a brief description of examples of the various services may be as follows.

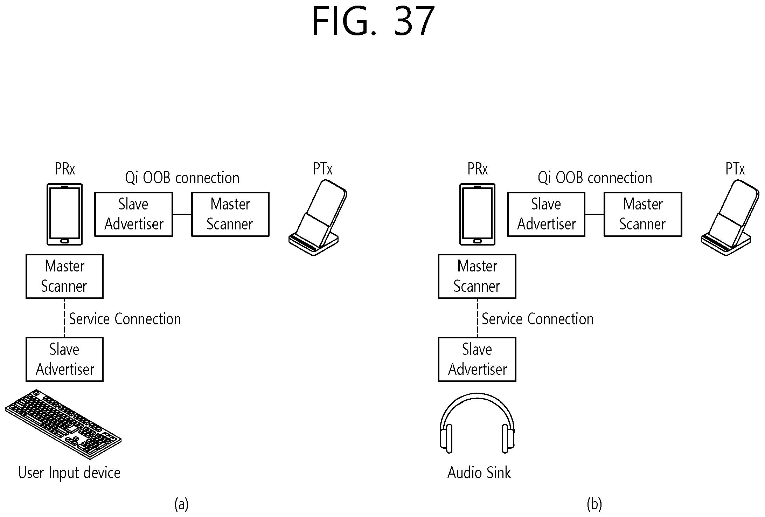

FIG. 37 schematically illustrates an example of automatic setting conversion according to an embodiment.

According to (a) of FIG. 37, an example of user interface connection may be provided. As shown in (a) of FIG. 37, the wireless power receiver may establish a Qi out-of-band connection with the wireless power transmitter (e.g., through BLE). Here, when an out-of-band connection is established, the wireless power transmitter may operate as a master scanner and the wireless power receiver may operate as a slave advertiser.

Meanwhile, the wireless power receiver may perform a service connection with a keyboard corresponding to a user input device. Here, when a service connection is established, the wireless power receiver may operate as a master scanner, and the user input device may operate as a slave advertiser.

According to the example shown in (a) of FIG. 37, when the smartphone corresponding to the wireless power receiver detects (or connects to) the wireless power transmitter, the smartphone automatically connects to the keyboard corresponding to the user input device according to the condition setting, the smartphone may receive signals through the keyboard.

According to (b) of FIG. 37, an example of an audio transmission connection may be provided. As shown in (b) of FIG. 37, the wireless power receiver may establish a Qi out-of-band connection with the wireless power transmitter (e.g., through BLE). Here, when an out-of-band connection is established, the wireless power transmitter may operate as a master scanner and the wireless power receiver may operate as a slave advertiser.

Meanwhile, the wireless power receiver may perform a service connection with an earphone/headset corresponding to an audio sink device. Here, when a service connection is established, the wireless power receiver may operate as a master scanner, and the user input device may operate as a slave advertiser.

According to the example shown in (b) of FIG. 37, when the smartphone corresponding to the wireless power receiving device detects (or connects to) the wireless power transmitting device, the smartphone automatically connects to the earphone/headset corresponding to the audio sink device according to the condition setting, the earphone/headset may receive a voice signal from the smartphone.

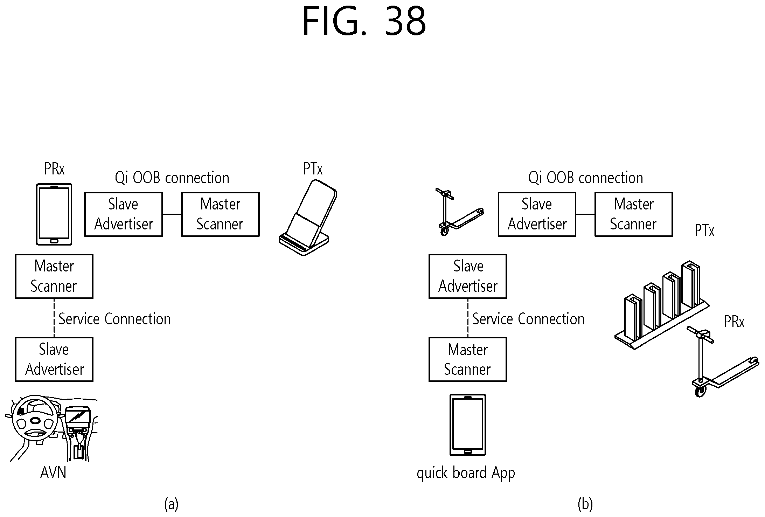

FIG. 38 schematically illustrates an example of automatic setting conversion according to another embodiment.

According to (a) of FIG. 38, an example of interworking between vehicle AVN and audio, phone book, and navigation may be provided. As shown in (a) of FIG. 38, the wireless power receiver may establish a Qi out-of-band connection with the wireless power transmitter (eg, through BLE). Here, when an out-of-band connection is established, the wireless power transmitter may operate as a master scanner and the wireless power receiver may operate as a slave advertiser.

Meanwhile, the wireless power receiver may perform a service connection with audio. video, navigation (AVN). Here, when a service connection is established, the wireless power receiver may operate as a master scanner and the AVN may operate as a slave advertiser.

According to the example shown in (a) of FIG. 38, when a smartphone corresponding to a wireless power receiving device detects (or connects to) a wireless power transmitting device, the smartphone automatically connects with AVN according to the condition setting, AVN can receive a voice signal from a smartphone.

According to (b) of FIG. 38, an example of controlling a scooter phone app may be provided. As shown in (b) of FIG. 38, the wireless power receiver may establish a Qi out-of-band connection with the wireless power transmitter (e.g., through BLE). Here, when an out-of-band connection is established, the wireless power transmitter may operate as a master scanner and the wireless power receiver may operate as a slave advertiser.

Meanwhile, the wireless power receiving device may perform a service connection with a smartphone (in particular, a kickboard app). Here, when a service connection is established, the wireless power receiver may operate as a slave advertiser and the smartphone may operate as a master scanner.

According to the example shown in (b) of FIG. 38, when the kickboard corresponding to the wireless power receiving device detects (or connects to) the wireless power transmitting device, the kickboard automatically connects with the smartphone (especially the kickboard app) according to the condition settings, the smartphone can automatically control the kickboard or kickboard-related actions through the kickboard app.

The following drawings are made to explain a specific example of the present specification. Since the names of specific devices or names of specific signals/messages/fields described in the drawings are provided as examples, the technical features of the present specification are not limited to the specific names used in the drawings below.

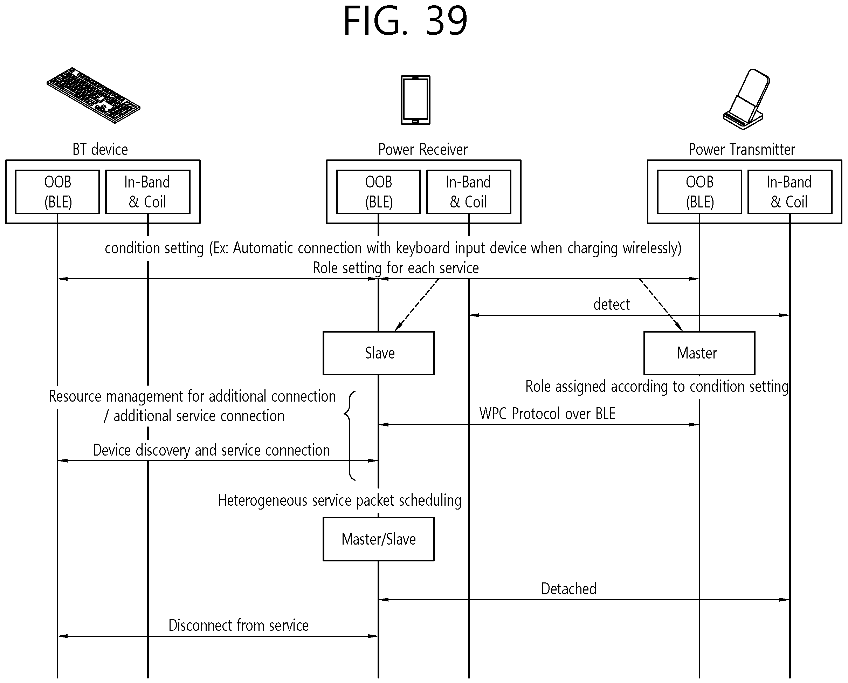

FIG. 39 is a flowchart of an additional service dual role and automatic setting conversion according to an embodiment of the present specification.

According to FIG. 39, a Bluetooth device, a power receiving device, and a power transmitting device may be provided. Here, the Bluetooth device may include a module and an in-band/coil that performs an OOB (BLE) operation. However, it is not essential that the in-band/coil is included in the Bluetooth device, and the in-band/coil may not be included in the Bluetooth device. The wireless power receiver and the wireless power transmitter may each include a module and an in-band/coil that perform an OOB (BLE) operation.

Here, condition setting and/or setting according to each service may be performed between the Bluetooth device and the power receiving device through OOB, condition setting and/or setting according to each service may be performed between the power receiving device and the power transmitting device through OOB. Here, as an example of condition setting, there may be a condition of automatic connection between a keyboard input device and a wireless power receiving device during wireless charging.

Through in-band/coil, sensing of each other may be performed between the power receiving device and/or the power transmitting device. At this time, in the OOB aspect, the power transmitting device may operate as a master and the power receiving device may operate as a slave. Here, a roll according to condition setting may be granted.

Meanwhile, resource management for additional connection/additional service connection may be performed, and at this time, the WPC protocol may be transmitted between the power receiving device and the power transmitting device through OOB (e.g., BLE). In addition, device discovery and service connection may be performed between the power receiving device and the Bluetooth device through OOB. At this time, heterogeneous service packet scheduling may be performed, and the power receiving device may operate as a master/slave in terms of OOB.

Thereafter, OOB detached may be performed between the power receiving device and the power transmitting device, and service connection may be disconnected between the power receiving device and the Bluetooth device.

So far, the embodiments of the present specification have been described. According to the embodiments of the present specification, through the present specification, messages exchanged between devices can be efficiently managed, and tampered or unnecessary messages can be filtered. In addition, memory resources can be efficiently managed while communicating with many devices.

That is, according to the present specification, the validity of the wireless power data packet can be verified through the integrity information, accordingly, even when hacking by a third device occurs, hacked wireless power data packets can be filtered, security and integrity of data may be enhanced. In addition, according to this specification, since not only integrity information but also time information can be provided, even if hacking by a third device occurs, the time exposed to the risk of hacking can be minimized, security and integrity of data may be enhanced. Additionally, according to the present specification, in the case of a common device, since keys related to the device are not stored or the keys are stored short, memory resources can be efficiently managed even when a common device is connected to a large number of devices.

Effects obtainable through specific examples of the present specification are not limited to the effects listed above. For example, there may be various technical effects that a person having ordinary skill in the related art can understand or derive from this specification. Accordingly, the specific effects of the present specification are not limited to those explicitly described in the present specification, and may include various effects that can be understood or derived from the technical features of the present specification.

Hereinafter, embodiments of the present specification will be described again from various subject points of view.

The following drawings are made to explain a specific example of the present specification. Since the names of specific devices or names of specific signals/messages/fields described in the drawings are provided as examples, the technical features of the present specification are not limited to the specific names used in the drawings below.

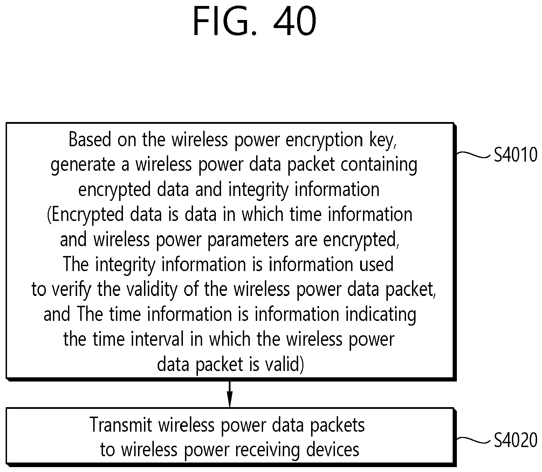

FIG. 40 is a flowchart of a method of transmitting a wireless power data packet performed by a wireless power transmitter according to an embodiment of the present specification.

According to FIG. 40, the wireless power transmitter may generate the wireless power data packet including encrypted data and integrity information based on a wireless power encryption key (S4010). Here, the encrypted data may be data in which time information and wireless power parameters are encrypted. Here, since a specific example for this is as described above, description of redundant content will be omitted in order to omit unnecessary repetition.

The wireless power transmitter may transmit the wireless power data packet to the wireless power receiver (S4020). Here, the integrity information may be information used to verify validity of the wireless power data packet, and the time information may be information indicating a valid time interval of the wireless power data packet. Here, since a specific example for this is as described above, description of redundant content will be omitted in order to omit unnecessary repetition.

On the other hand, although not shown separately, the wireless power transmitter may be a wireless power transmitter comprising a power converter configured to transmit wireless power to a wireless power receiver by magnetic coupling at an operating frequency and a controller configured to communicate with the wireless power receiver and control transmission of the wireless power using at least one of in-band communication using the operating frequency and out-band communication using a frequency other than the operating frequency, wherein the controller is configured to, based on a wireless power encryption key, generate a wireless power data packet including encrypted data and integrity information, wherein the encrypted data is data in which time information and a wireless power parameter are encrypted, and transmit the wireless power data packet to a wireless power receiver, wherein the integrity information is information used to verify a validity of the wireless power data packet, and wherein the time information is information informing a valid time interval of the wireless power data packet. Here, since a specific example for this is as described above, description of redundant content will be omitted in order to omit unnecessary repetition.

The following drawings are made to explain a specific example of the present specification. Since the names of specific devices or names of specific signals/messages/fields described in the drawings are provided as examples, the technical features of the present specification are not limited to the specific names used in the drawings below.

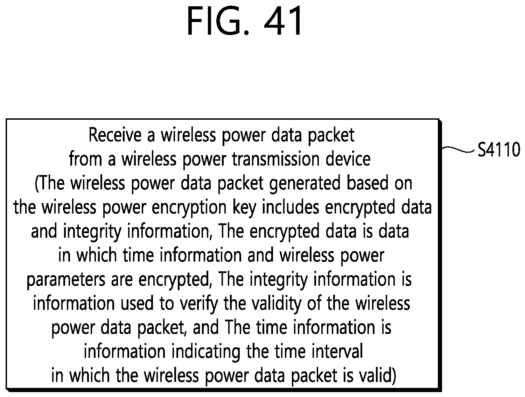

FIG. 41 is a flowchart of a method of receiving a wireless power data packet performed by a wireless power receiver according to an embodiment of the present specification.

According to FIG. 41, the wireless power receiver may receive the wireless power data packet from the wireless power transmitter (S4110). Here, the wireless power data packet generated based on the wireless power encryption key includes encrypted data and integrity information, the encrypted data is data in which time information and wireless power parameters are encrypted, the integrity information is information used to verify the validity of the wireless power data packet, and the time information may be information indicating a valid time interval of the wireless power data packet. Here, since a specific example for this is as described above, description of redundant content will be omitted in order to omit unnecessary repetition.

On the other hand, although not separately shown, the wireless power receiver may be a wireless power receiver comprising a power pickup configured to receive wireless power from a wireless power transmitter by magnetic coupling at an operating frequency and a controller configured to communicate with the wireless power transmitter and control reception of the wireless power using at least one of in-band communication using the operating frequency and out-band communication using a frequency other than the operating frequency, wherein the controller is configured to receive a wireless power data packet from a wireless power transmitter, wherein the wireless power data packet generated based on a wireless power encryption key includes encrypted data and integrity information, wherein the encrypted data is data in which time information and a wireless power parameter are encrypted, wherein the integrity information is information used to verify a validity of the wireless power data packet, and wherein the time information is information informing a valid time interval of the wireless power data packet. Here, since a specific example for this is as described above, description of redundant content will be omitted in order to omit unnecessary repetition.

The claims set forth herein can be combined in a variety of ways. For example, the technical features of the method claims of this specification may be combined to be implemented as a device, and the technical features of the device claims of this specification may be combined to be implemented as a method. In addition, the technical features of the method claims of the present specification and the technical features of the device claims may be combined to be implemented as a device, and the technical features of the method claims of the present specification and the technical features of the device claims may be combined to be implemented as a method.

**Claims**

1.  A method for transmitting a wireless power data packet, the method performed by a wireless power transmitter and comprising:

    based on a wireless power encryption key, generating the wireless power data packet including encrypted data and integrity information,
    wherein the encrypted data is data in which time information and a wireless power parameter are encrypted; and
    transmitting the wireless power data packet to a wireless power receiver,
    wherein the integrity information is information used to verify a validity of the wireless power data packet, and
    wherein the time information is information informing a valid time interval of the wireless power data packet.

2.  The method of claim 1, wherein the wireless power transmitter establishes in-band communication using a power signal of wireless power and out-band communication using Bluetooth-based communication,
    wherein the wireless power data packet is transmitted based on the out-band communication.

3.  The method of claim 2, wherein the out-band communication is Bluetooth low energy (BLE) communication.

4. The method of claim 2, wherein the wireless power encryption key is transmitted based on the in-band communication.

5. The method of claim 2, wherein the time information is configured based on charging capacity information exchanged between the wireless power transmitter and the wireless power receiver.

6. The method of claim 5, wherein the charging capacity information is exchanged through the in-band communication.

7. The method of claim 5, wherein the valid time interval is set short when a charging capacity indicated by the charging capacity information is large and transmission power is high.

8. The method of claim 1, wherein the time information or the wireless power encryption key is linked to the wireless power transmitter or user account.

9. The method of claim 1, wherein the wireless power data packet is generated based on a wireless power encryption nonce and the wireless power encryption key.

10. A wireless power transmitter comprising:

a power converter configured to transmit wireless power to a wireless power receiver by magnetic coupling at an operating frequency; and
a controller configured to communicate with the wireless power receiver and control transmission of the wireless power using at least one of in-band communication using the operating frequency and out-band communication using a frequency other than the operating frequency,
wherein the controller is configured to:

based on a wireless power encryption key, generate a wireless power data packet including encrypted data and integrity information,
wherein the encrypted data is data in which time information and a wireless power parameter are encrypted, and
transmit the wireless power data packet to a wireless power receiver,
wherein the integrity information is information used to verify a validity of the wireless power data packet, and
wherein the time information is information informing a valid time interval of the wireless power data packet.

11. A method for receiving a wireless power data packet, the method performed by a wireless power receiver and comprising:

receiving the wireless power data packet from a wireless power transmitter,
wherein the wireless power data packet generated based on a wireless power encryption key includes encrypted data and integrity information,
wherein the encrypted data is data in which time information and a wireless power parameter are encrypted,
wherein the integrity information is information used to verify a validity of the wireless power data packet, and
wherein the time information is information informing a valid time interval of the wireless power data packet.

12. The method of claim 11, wherein the wireless power receiver establishes in-band communication using a power signal of wireless power and out-band communication using Bluetooth-based communication,
wherein the wireless power data packet is received based on the out-band communication.

13. The method of claim 12, wherein the out-band communication is Bluetooth low energy (BLE) communication.

14. The method of claim 12, wherein the wireless power encryption key is transmitted based on the in-band communication.

15. The method of claim 12, wherein the time information is configured based on charging capacity information exchanged between the wireless power transmitter and the wireless power receiver.

16. The method of claim 15, wherein the charging capacity information is exchanged through the in-band communication.

17. The method of claim 15, wherein the valid time interval is set short when a charging capacity indicated by the charging capacity information is large and transmission power is high.

18. The method of claim 11, wherein the time information or the wireless power encryption key is linked to the wireless power transmitter or user account.

19. The method of claim 11, wherein the wireless power data packet is generated based on a wireless power encryption nonce and the wireless power encryption key.

20. A wireless power receiver comprising:

a power pickup configured to receive wireless power from a wireless power transmitter by magnetic coupling at an operating frequency; and
a controller configured to communicate with the wireless power transmitter and control reception of the wireless power using at least one of in-band communication using the operating frequency and out-band communication using a frequency other than the operating frequency,
wherein the controller is configured to:

receive a wireless power data packet from a wireless power transmitter,
wherein the wireless power data packet generated based on a wireless power encryption key includes encrypted data and integrity information,
wherein the encrypted data is data in which time information and a wireless power parameter are encrypted,
wherein the integrity information is information used to verify a validity of the wireless power data packet, and
wherein the time information is information informing a valid time interval of the wireless power data packet.

# FIG. 1

10

100                                    200

Source → | wireless power transmitter | ⟿→ | wireless power receiver |

# FIG. 2

10

100

Source → wireless power transmitter

wireless power receiver ~200-1

wireless power receiver ~200-2

⋮

wireless power receiver ~200-m

# FIG. 3

# FIG. 4

|  | b7 | b6 | b5 | b4 | b3 | b2 | b1 | b0 |
|---|---|---|---|---|---|---|---|---|
| Byte 0 | Application Profile ||||||||
| Byte 1 | Version ||||||||
| Byte 2-N-1 | Profile-specific data ||||||||

# FIG. 5

EP 4 231 500 A1

# FIG. 6

(a) BR/EDR Protocol Stack

Host (470)

| BR/EDR Profile (25) |
| Generic Access Profile (GAP, 24) |
| Generic Attribute Profile (GATT, 23) |
| Attribute Protocol (ATT, 22) |
| Logical Link Control and Adaptation Protocol (L2CAP, 21) |
| Host Controller Interface (HCI, 18) |
| Link Manager (LL, 16) |
| Link Controller (LL, 14) |
| PHY (12) |

Controller (460)

(b) LE Protocol Stack

Host (490)

| LE Profile (46) |
| Generic Access Profile (GAP, 45) |
| Generic Attribute Profile (GATT, 44) |
| Attribute Protocol (ATT, 43) | Security Manager (SM, 42) |
| Logical Link Control and Adaptation Protocol (L2CAP, 21) |
| Host Controller Interface (HCI, 36) |
| Link Layer (LL, 34) |
| PHY (32) |

Controller (480)

EP 4 231 500 A1

# FIG. 7

EP 4 231 500 A1

# FIG. 8

EP 4 231 500 A1

# FIG. 9

# FIG. 10

FIG. 11

700

720 COVER

WIRELESS POWER TRANSMISSION DEVICE

POWER TRANSMITTER

740

790 COMMUNICATION UNIT

710 CONTROL UNIT

760 COIL ASSEMBLY

770 IMPEDANCE MATCHING CIRCUIT

780 INVERTER

750 USER INTERFACE

730 POWER ADAPTER

# FIG. 12

800

840 — LOAD CIRCUIT

860 — POWER CONVERTER

870 — IMPEDANCE MATCHING CIRCUIT

880 — COIL ASSEMBLY

830 — POWER RECEIVER

890 — COMMUNICATION UNIT

810 — CONTROL UNIT

820 — USER INTERFACE

WIRELESS POWER RECEPTION DEVICE

850 — BASE

# FIG. 13

1010

Wireless Power
Transmitter

1020

Wireless Power
Receiver

Analog Ping — S1101

FOD — S1102

Digital Ping — S1103

SIG — S1104

# FIG. 14

# FIG. 15

|  | b7 | b6 | b5 | b4 | b3 | b2 | b1 | b0 |
|---|---|---|---|---|---|---|---|---|
| B0 | '00' | | Reference Power | | | | | |
| B1 | Reserved | | | | | | | |
| B2 | ZERO | AI | Reserved | OB | ZERO | Count | | |
| B3 | Window Size | | | | Window Offset | | | |
| B4 | Neg | Pol | Depth | | Buffer Size | | | Dup |

# FIG. 16

# FIG. 17

| | b7 | b6 | b5 | b4 | b3 | b2 | b1 | b0 |
|---|---|---|---|---|---|---|---|---|
| B0 | Reserved | | Negotiable Load Power | | | | | |
| B1 | Reserved | | Potential Load Power | | | | | |
| B2 | Dup | AR | OB | Buffer Size | | | WPID | NRS |

# FIG. 18

# FIG. 19

Data stream initiator

Application layer

Buffer

Application message

Feedback

Transport layer

Buffer

Application message slice

Data packet

Data packet

• • •

Data packet

ACK/NAK/ND

Data stream responder

Application layer

Buffer

Application message

Transport layer

Buffer

Application message slice

EP 4 231 500 A1

# FIG. 20

EP 4 231 500 A1

Power Receiver to Power Transmitter data stream

| RP | ACK | ADC | ACK | CE | ADT | ACK | CE | ADT | ACK | CE | RP | ACK | CE | CE | ADC | ACK | CE | CE | CE |

/gp/8　　　　even/6　　　odd/2　　　　　　　　　　　　/end

Power Transmitter to Power Receiver data stream

| RP | ATN | DSR | ADC | CE | DSR | ADT | CE | DSR | ADT | CE | RP | ACK | CE | CE | DSR | ADC | CE | DSR | CE |

/poll /gp/4　　　/ack even/3　　/ack odd/1　　　　　　　　　　　/ack /end　　/ack

# FIG. 21

|       | $b_7$ | $b_6$ | $b_5$ | $b_4$ | $b_3$ | $b_2$ | $b_1$ | $b_0$ |
|-------|-------|-------|-------|-------|-------|-------|-------|-------|
| $B_0$ | Request | | | | | (mbs) | | |
| $B_1$ | Parameter | | | | | | | (lsb) |

# FIG. 22

| | $b_7$ | $b_6$ | $b_5$ | $b_4$ | $b_3$ | $b_2$ | $b_1$ | $b_0$ |
|---|---|---|---|---|---|---|---|---|
| $B_0$ | | | | | | | | |
| ⋮ | | | | Data | | | | |
| $B_n$ | | | | | | | | |

# FIG. 23

# FIG. 24

```
┌─────────────────┐                    ┌─────────────────┐
│ Wireless power  │                    │ Wireless power  │
│   transmitter   │                    │    receiver     │
└─────────────────┘                    └─────────────────┘
```

Based on the wireless power encryption key,
generate a wireless power data packet
containing encrypted data and integrity fields ~S2410

Wireless power data packet
(via out-of-band communication) ~S2420

# FIG. 25

# FIG. 26

PRx

(a)

PRx

(b)

PRx

(c)

PTx

# FIG. 27

# FIG. 28

| Preamble (1byte) | Access Address (4bytes) | ... | Method (6bits) | ... | Characteristic ID (2bytes) | ... | Time Stamp / accuracy | Time Priority / Header | Qi Info. |
|---|---|---|---|---|---|---|---|---|---|

| Message Type | Message ID Time | Qi Parameter |
|---|---|---|

Qi Encryption Key

Qi Encryption Nonce

AES-CCM

Encrypted Data

Qi MAC

EP 4 231 500 A1

# FIG. 29

```
┌──────────────────────┐
│  ┌────────────────┐  │       ┌──────────────┐       ┌──────────────┐
│  │ PTx Private Key│  │       │              │       │ PTx Link Key │
│  └────────────────┘  │──────▶│  ECDH P-256  │──────▶│ Qi Link Key  │
│  ┌────────────────┐  │       │              │       │              │
│  │ PRx Public Key │  │       └──────────────┘       └──────────────┘
│  └────────────────┘  │
└──────────────────────┘
```

# FIG. 30

(a)

(b)

# FIG. 31

DevKey

NetKey 0
0x0000

AppKey 0
0x0000

Model 0

NetKey 1
0x0013

AppKey 1
0x0022

Model 1

NetKey 2
0x001a

AppKey 2
0x0027

Model 2

AppKey 3
0x002e

(a)

App Key

Model: E-bike charged

Model: Car charged

Qi Encryption Key

Model: Laptop charged

Cloud / Account Key

BT Device Key

Model: Phone charged

In the case of BT Device Key, integrated management is
possible in the cloud in connection with the user's account

(b)

# FIG. 32

| Link key DB TLV (implements btstack_link_key_db.h) | LE Device DB (implements le_device_db.h) |
| --- | --- |
| TLV DB (implements btstack_tlv.h) | |
| HAL Flash Bank (implements hal_flash_back.h) | |

# FIG. 33

# FIG. 34

```
┌──────────────┐                    ┌──────────────┐
│ shared device│                    │personal device│
└──────┬───────┘                    └──────┬───────┘
       │                                   │
       │ Field indicating that this is a public device │
       ├───────────────────────────────────────►│ ~ S3410
       │                                   │
       │                                   │
```

# FIG. 35

# FIG. 36

PRx

#1: PRx self-detection
(Conversion of connection settings
depending on whether it is charged or not)

#2: PTx Negotiation

Automatic input method change

PTx

User Input device

# FIG. 37

(a)

(b)

# FIG. 38

PRx     Qi OOB connection     PTx

| Slave Advertiser | Master Scanner |
|---|---|

| Master Scanner |
|---|

Service Connection

| Slave Advertiser |
|---|

AVN

(a)

Qi OOB connection

| Slave Advertiser | Master Scanner |
|---|---|

PTx

| Slave Advertiser |
|---|

Service Connection

| Master Scanner |
|---|

PRx

quick board App

(b)

# FIG. 39

BT device           Power Receiver           Power Transmitter

| OOB (BLE) | In-Band & Coil | | OOB (BLE) | In-Band & Coil | | OOB (BLE) | In-Band & Coil |

condition setting (Ex: Automatic connection with keyboard input device when charging wirelessly)

Role setting for each service

detect

Slave

Master

Role assigned according to condition setting

Resource management for additional connection / additional service connection

WPC Protocol over BLE

Device discovery and service connection

Heterogeneous service packet scheduling

Master/Slave

Detached

Disconnect from service

EP 4 231 500 A1

# FIG. 40

Based on the wireless power encryption key,
generate a wireless power data packet containing
encrypted data and integrity information
(Encrypted data is data in which time information
and wireless power parameters are encrypted,
The integrity information is information used
to verify the validity of the wireless power data packet,
and The time information is information indicating
the time interval in which the wireless power
data packet is valid) —— S4010

Transmit wireless power data packets
to wireless power receiving devices —— S4020

# FIG. 41

Receive a wireless power data packet
from a wireless power transmission device
(The wireless power data packet generated based on
the wireless power encryption key includes encrypted data
and integrity information, The encrypted data is data
in which time information and wireless power
parameters are encrypted, The integrity information is
information used to verify the validity of the wireless
power data packet, and The time information is
information indicating the time interval
in which the wireless power data packet is valid) ~S4110

| INTERNATIONAL SEARCH REPORT | International application No. |
|---|---|
| | **PCT/KR2021/014489** |

**A.　CLASSIFICATION OF SUBJECT MATTER**

**H02J 50/80**(2016.01)i; **H02J 50/20**(2016.01)i; **H04B 5/00**(2006.01)i; **H04L 9/40**(2022.01)i

According to International Patent Classification (IPC) or to both national classification and IPC

**B.　FIELDS SEARCHED**

Minimum documentation searched (classification system followed by classification symbols)

H02J 50/80(2016.01); H02J 5/00(2006.01); H02J 50/00(2016.01); H02J 50/12(2016.01); H02J 50/60(2016.01); H02J 7/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 무선전력전송(WPT, wireless power transfer), 데이터 무결성(data integrity), 패킷 (packet), BLE(bluetooth low energy), 난스(nonce)

**C.　DOCUMENTS CONSIDERED TO BE RELEVANT**

| Category* | Citation of document, with indication, where appropriate, of the relevant passages | Relevant to claim No. |
|---|---|---|
| A | KR 10-2015-0093589 A (LG ELECTRONICS INC.) 18 August 2015 (2015-08-18)<br>See paragraphs [0188]-[0244]; and figures 12a-18. | 1-20 |
| A | KR 10-2019-0082891 A (LG ELECTRONICS INC.) 10 July 2019 (2019-07-10)<br>See paragraphs [0076]-[0288]; and figures 7-26. | 1-20 |
| A | KR 10-2012-0090220 A (SAMSUNG ELECTRONICS CO., LTD.) 17 August 2012 (2012-08-17)<br>See paragraphs [0038]-[0077]; and figures 3-7. | 1-20 |
| A | KR 10-2019-0006852 A (SAMSUNG ELECTRONICS CO., LTD.) 21 January 2019 (2019-01-21)<br>See paragraphs [0045]-[0127]; and figures 3-8. | 1-20 |
| A | KR 10-2019-0138631 A (LG ELECTRONICS INC.) 13 December 2019 (2019-12-13)<br>See paragraphs [0032]-[0182]; and figures 1-11. | 1-20 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **24 January 2022** | **24 January 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

<div align="center">

**INTERNATIONAL SEARCH REPORT**
**Information on patent family members**

</div>

| International application No. |
| --- |
| **PCT/KR2021/014489** |

| Patent document cited in search report | | | Publication date (day/month/year) | Patent family member(s) | | | Publication date (day/month/year) |
| --- | --- | --- | --- | --- | --- | --- | --- |
| KR | 10-2015-0093589 | A | 18 August 2015 | CN | 105981256 | A | 28 September 2016 |
| | | | | CN | 105981256 | B | 31 December 2019 |
| | | | | CN | 106165250 | A | 23 November 2016 |
| | | | | CN | 106165250 | B | 25 June 2019 |
| | | | | EP | 3131180 | A1 | 15 February 2017 |
| | | | | EP | 3131180 | A4 | 04 October 2017 |
| | | | | EP | 3131180 | B1 | 05 June 2019 |
| | | | | JP | 2017-511111 | A | 13 April 2017 |
| | | | | JP | 6273040 | B2 | 31 January 2018 |
| | | | | KR | 10-1708312 | B1 | 20 February 2017 |
| | | | | KR | 10-1792140 | B1 | 02 November 2017 |
| | | | | KR | 10-1912253 | B1 | 26 October 2018 |
| | | | | KR | 10-2015-0093588 | A | 18 August 2015 |
| | | | | KR | 10-2016-0145554 | A | 20 December 2016 |
| | | | | KR | 10-2017-0131824 | A | 30 November 2017 |
| | | | | KR | 10-2018-0118572 | A | 31 October 2018 |
| | | | | KR | 10-2198782 | B1 | 05 January 2021 |
| | | | | US | 10177592 | B2 | 08 January 2019 |
| | | | | US | 10193398 | B2 | 29 January 2019 |
| | | | | US | 10256666 | B2 | 09 April 2019 |
| | | | | US | 10804729 | B2 | 13 October 2020 |
| | | | | US | 2016-0308397 | A1 | 20 October 2016 |
| | | | | US | 2016-0329755 | A1 | 10 November 2016 |
| | | | | US | 2017-0047786 | A1 | 16 February 2017 |
| | | | | US | 2019-097450 | A1 | 28 March 2019 |
| | | | | WO | 2015-119456 | A1 | 13 August 2015 |
| | | | | WO | 2015-119458 | A1 | 13 August 2015 |
| | | | | WO | 2015-156628 | A1 | 15 October 2015 |
| KR | 10-2019-0082891 | A | 10 July 2019 | CN | 110073574 | A | 30 July 2019 |
| | | | | EP | 3544151 | A1 | 25 September 2019 |
| | | | | EP | 3544151 | A4 | 27 May 2020 |
| | | | | KR | 10-2021-0049990 | A | 06 May 2021 |
| | | | | KR | 10-2248264 | B1 | 06 May 2021 |
| | | | | US | 11205929 | B2 | 21 December 2021 |
| | | | | US | 2019-0280534 | A1 | 12 September 2019 |
| | | | | WO | 2018-093099 | A1 | 24 May 2018 |
| KR | 10-2012-0090220 | A | 17 August 2012 | CN | 103477536 | A | 25 December 2013 |
| | | | | CN | 103477536 | B | 25 November 2015 |
| | | | | EP | 2673866 | A2 | 18 December 2013 |
| | | | | EP | 2673866 | A4 | 25 May 2016 |
| | | | | JP | 2014-505460 | A | 27 February 2014 |
| | | | | KR | 10-1779344 | B1 | 19 September 2017 |
| | | | | US | 09160421 | B2 | 13 October 2015 |
| | | | | US | 2012-0202435 | A1 | 09 August 2012 |
| | | | | WO | 2012-108663 | A2 | 16 August 2012 |
| | | | | WO | 2012-108663 | A3 | 13 December 2012 |
| KR | 10-2019-0006852 | A | 21 January 2019 | CN | 110754071 | A | 04 February 2020 |
| | | | | EP | 3635940 | A1 | 15 April 2020 |
| | | | | EP | 3635940 | A4 | 27 May 2020 |
| | | | | US | 10959096 | B2 | 23 March 2021 |

Form PCT/ISA/210 (patent family annex) (July 2019)

| INTERNATIONAL SEARCH REPORT<br>Information on patent family members | | International application No.<br><br>**PCT/KR2021/014489** | |
|---|---|---|---|

| Patent document<br>cited in search report | Publication date<br>(day/month/year) | Patent family member(s) | | | Publication date<br>(day/month/year) |
|---|---|---|---|---|---|
| | | US | 2019-0021001 | A1 | 17 January 2019 |
| | | WO | 2019-013547 | A1 | 17 January 2019 |
| KR 10-2019-0138631 A | 13 December 2019 | CN | 110537309 | A | 03 December 2019 |
| | | CN | 110612653 | A | 24 December 2019 |
| | | CN | 110622392 | A | 27 December 2019 |
| | | EP | 3576249 | A1 | 04 December 2019 |
| | | EP | 3576249 | A4 | 12 February 2020 |
| | | EP | 3579380 | A1 | 11 December 2019 |
| | | EP | 3579380 | A4 | 11 March 2020 |
| | | EP | 3582368 | A1 | 18 December 2019 |
| | | EP | 3582368 | A4 | 11 March 2020 |
| | | EP | 3890160 | A1 | 06 October 2021 |
| | | JP | 2020-515224 | A | 21 May 2020 |
| | | JP | 2020-522148 | A | 27 July 2020 |
| | | JP | 2020-522213 | A | 27 July 2020 |
| | | JP | 2021-141810 | A | 16 September 2021 |
| | | JP | 6883116 | B2 | 09 June 2021 |
| | | KR | 10-2019-0122214 | A | 29 October 2019 |
| | | KR | 10-2019-0122215 | A | 29 October 2019 |
| | | KR | 10-2242518 | B1 | 21 April 2021 |
| | | KR | 10-2242523 | B1 | 21 April 2021 |
| | | US | 10749574 | B2 | 18 August 2020 |
| | | US | 10805888 | B2 | 13 October 2020 |
| | | US | 10879962 | B2 | 29 December 2020 |
| | | US | 10886973 | B2 | 05 January 2021 |
| | | US | 10998775 | B2 | 04 May 2021 |
| | | US | 11005307 | B2 | 11 May 2021 |
| | | US | 11114902 | B2 | 07 September 2021 |
| | | US | 11177860 | B2 | 16 November 2021 |
| | | US | 2019-0296799 | A1 | 26 September 2019 |
| | | US | 2019-0372403 | A1 | 05 December 2019 |
| | | US | 2020-0044694 | A1 | 06 February 2020 |
| | | US | 2020-0252886 | A1 | 06 August 2020 |
| | | US | 2020-0274401 | A1 | 27 August 2020 |
| | | US | 2020-0280342 | A1 | 03 September 2020 |
| | | US | 2020-0322003 | A1 | 08 October 2020 |
| | | US | 2020-0328631 | A1 | 15 October 2020 |
| | | US | 2020-0336021 | A1 | 22 October 2020 |
| | | US | 2020-0389060 | A1 | 10 December 2020 |
| | | US | 2021-0257867 | A1 | 19 August 2021 |
| | | WO | 2018-203652 | A1 | 08 November 2018 |
| | | WO | 2019-203537 | A1 | 24 October 2019 |
| | | WO | 2019-203539 | A1 | 24 October 2019 |

Form PCT/ISA/210 (patent family annex) (July 2019)